(19) Europäisches Patentamt
European Patent Office
Office européen des brevets

(11) **EP 1 259 939 B1**

(12) **FASCICULE DE BREVET EUROPEEN**

(45) Date de publication et mention
de la délivrance du brevet:
**06.05.2004 Bulletin 2004/19**

(21) Numéro de dépôt: **01909896.1**

(22) Date de dépôt: **23.02.2001**

(51) Int Cl.⁷: **G06T 5/00**

(86) Numéro de dépôt international:
**PCT/FR2001/000546**

(87) Numéro de publication internationale:
**WO 2001/063557 (30.08.2001 Gazette 2001/35)**

(54) **PROCEDE ET DISPOSITIF DE PERCEPTION AUTOMATIQUE**

VERFAHREN UND VORRICHTUNG ZUR AUTOMATISCHEN WAHRNEHMUNG

AUTOMATIC PERCEPTION METHOD AND DEVICE

(84) Etats contractants désignés:
**AT BE CH CY DE DK ES FI FR GB GR IE IT LI LU
MC NL PT SE TR**

(30) Priorité: **24.02.2000 FR 0002355**

(43) Date de publication de la demande:
**27.11.2002 Bulletin 2002/48**

(73) Titulaire: **Holding B.E.V. S.A.
2953 Luxembourg (LU)**

(72) Inventeur: **PIRIM, Patrick
F-75013 Paris (FR)**

(74) Mandataire: **Catherine, Alain
Cabinet Harlé & Phélip
7, rue de Madrid
75008 Paris (FR)**

(56) Documents cités:
**EP-A- 0 046 110          FR-A- 2 751 772
US-A- 5 793 888**

## Description

L'invention concerne un procédé et un dispositif de perception automatique. Le dispositif comporte une unité de calcul d'histogramme encore appelée neurone spatio-temporel électronique, de préférence auto-adaptative éventuellement avec anticipation et apprentissage. Ils sont plus particulièrement destinés à la perception et au traitement d'images.

On connaît des procédés et des dispositifs de traitement d'images permettant, en temps réel, de reconnaître, de localiser et/ou d'extraire des objets correspondants à certains critères de leur contexte.

Les critères de sélections peuvent être extrêmement variés. Il peut s'agir d'une vitesse, d'une forme, d'une couleur... ou d'une combinaison de ces critères.

Ces procédés et dispositifs peuvent être utilisés pour faciliter l'appréhension d'une scène ou d'un phénomène par un observateur ou pour commander un automatisme à partir des informations ainsi extraites.

De tels procédés et dispositifs sont par exemple décrits dans les publications suivantes FR-2.611.063 et WO-98/05002.

Certains de ces procédés et dispositifs mettent en oeuvre une unité de traitement spatial et temporel qui, recevant un signal S(PI) de type vidéo, produit un certains nombre de paramètres pour chaque pixel. Il s'agit par exemple de la vitesse V, de la direction DL, d'une constante de temps CO, et d'un paramètre binaire de validation VL en plus du signal vidéo retardé VR et des différents signaux de synchronisation de trame, de ligne et de pixel regroupés sous la dénomination F.

Dans de tels dispositifs, on a déjà souligné l'intérêt de constituer des histogrammes de ces paramètres permettant la constitution la manipulation et l'exploitation d'informations statistiques.

Le but de ces procédés et de ces dispositifs de traitement d'images est de fournir en sortie un signal S' (t) qui porte pour chaque pixel une information significative du résultat de l'application de critères de reconnaissance ou de sélection. Ces critères sont prédéfinis ou élaborés par les procédés et dispositifs de traitements d'images eux mêmes.

On connaît en particulier un tel procédé et un tel dispositif décrit dans la demande de brevet WO-98/05002, déjà citée.

Par ailleurs, on connait un dispositif d'obtention de l'histogramme des distances dans le temps entre des événements successifs, décrit dans la demande EP-A-46110.

Le but de l'invention est de proposer un procédé et un dispositif de perception automatique rapide et efficace et d'améliorer pour un tel dispositif les unités de constitution d'histogrammes en assurant des fonctions d'auto-adaptation et, dans des modes de réalisation préférés d'anticipation et d'apprentissage.

La présente invention concerne à cet effet un dispositif de perception automatique d'un événement intervenant dans un espace par rapport à au moins un paramètre.

Selon l'invention, ce dispositif comporte une unité de contrôle, un bus de données, un bus de rétroannotation et au moins une unité de calcul d'histogramme pour le traitement du paramètre.

La présente invention concerne également les caractéristiques qui ressortiront au cours de la description qui va suivre et qui devront être considérées isolément ou selon toutes leurs combinaisons techniques possibles :

- le dispositif comporte, pour traiter plusieurs paramètres, plusieurs unités de calcul d'histogramme organisées en matrice ;
- les unités de calcul d'histogramme traitent des données $a_{ijt}$ associées à des pixels formant ensemble un espace multidimensionnel évoluant dans le temps et représenté à une succession de moments, les données parvenant à l'unité de calcul sous la forme d'un signal DATA(A) numérique sous forme d'une suite $a_{ijt}$ de nombre binaire de n bits associé à des signaux de synchronisation permettant de définir le moment donné de l'espace et la position du pixel dans cet espace, auquel le signal $a_{ijt}$ reçu à un instant donné est associé, comprenant :

  - une mémoire d'analyse comportant une mémoire avec des adresses, chacune associée à des valeurs possibles des nombres de n bits du signal DATA(A) et dont l'écriture est contrôlée par un signal " WRITE ",
  - un classifieur comportant une mémoire destinée à recevoir un critère C de sélection du paramètre DATA(A), recevant le signal DATA(A) en entrée et fournissant, en sortie, un signal binaire de classification dont la valeur dépend du résultat de la comparaison du signal DATA(A) avec le critère C de sélection,
  - une unité de rétroannotation recevant le signal de sortie du classifieur et, de l'extérieur de l'unité de calcul de l'histogramme, des signaux binaires de classification individuels concernant des paramètres autres que DATA (A), ladite unité de rétroannotation fournissant en sortie un signal de validation global positif lorsque l'ensemble des signaux de rétroannotation individuels sont valides,
  - une unité de test,
  - une unité de sortie d'analyse,

- un multiplexeur d'adresses,
- une unité de validation d'incrémentation,

le compteur de chaque adresse de la mémoire correspondant à la valeur d de $a_{ijt}$ à un instant donné, étant incrémentée d'une unité lorsque l'unité de rétroannotation fournit en sortie un signal de validation global positif,

l'unité de calcul et de mémorisation de données statistiques exploitant à la fin de la réception des données $a_{ijt}$ correspondant à l'espace à un moment le contenu de la mémoire pour mettre à jour l'unité de sortie d'analyse,

la mémoire étant effacée avant le début de chaque trame pour un espace à un moment par un signal d'initialisation " INIT",

et en outre :

- la mémoire du classifieur est une mémoire adressable permettant la mise à jour en temps réel du critère de sélection et ayant une entrée de données DATA IN, une commande d'adresse ADRESS et une commande d'écriture WR, recevant sur son entrée la sortie de la mémoire d'analyse et un signal END sur sa commande d'écriture,
- les unités de traitement d'histogramme comportent, de plus, un multiplexeur d'entrée de données ayant deux entrées et une sortie, recevant sur l'une de ses entrées un signal de comptage COUNTER et, sur l'autre de ses entrées, la suite de données $a_{ijt}$ et fournissant en sortie la suite de données $a_{ijt}$ à la commande d'adresse de la mémoire du classifieur et un opérateur OU commandant le multiplexeur d'adresse et recevant sur ses entrées un signal d'initialisation INIT et le signal de fin END ;
- l'espace est à deux dimensions et le signal DATA(A) est associé aux pixels d'une succession d'images ;
- les unités de traitements d'histogramme comportent des moyens d'anticipation de la valeur du critère de sélection ;
- les moyens d'anticipation de la valeur du critère de sélection comportent des mémoires destinées à contenir les valeurs de paramètres statistiques relatives à deux trames successives ;
- les paramètres statistiques sont les valeurs moyennes des données $a_{ijt}$ validées ;
- le registre de sortie d'analyse des unités de calcul d'histogramme constitue et garde en mémoire l'une au moins des valeurs suivantes : la valeur minimum " MIN ", la valeur maximum " MAX", le nombre maximum de pixels pour lesquels le signal $V_{ijt}$ a une valeur particulière " RMAX ", la valeur particulière correspondante POSRMAX, le nombre total de pixels validés " NBPTS " ;
- le paramètre statistique de comparaison utilisé par le classifieur est RMAX/2 ;
- elle comporte un multiplexeur commandé, pouvant recevoir en entrée plusieurs paramètres statistiques et la nature de la comparaison faite par le classifieur dépend de la commande de ce multiplexeur ;
- certaines unités de calcul d'histogramme, au moins, comportent un multiplexeur d'apprentissage destiné à recevoir un signal de commande extérieur et produisant un fonctionnement selon un mode d'apprentissage dans lequel les registres du classifieur et de l'unité de rétroannotation sont effacés au début de l'exploitation d'une trame et que le registre de sortie d'analyse fournit des valeurs caractéristiques de la séquence pour chacun de ces registres ;
- dans certaines unités de calcul d'histogramme, au moins, la mémoire du classifieur est constituée d'un ensemble de registres indépendants comportant chacun une entrée, une sortie et une commande d'écriture, le nombre de ces registres étant égal au nombre n de bits des nombres de la suite $V_{ijt}$, et elle comporte un décodeur permettant de sortir un signal de commande d'écriture correspondant à la valeur d'entrée (adresse) associée et un multiplexeur commandé par cette valeur d'entrée, permettant de lire le registre choisi ;
- certaines unités de calcul d'histogramme au moins, comportent des multiplexeurs, un d'entre eux étant associé à l'entrée de chaque registre et des modules combinatoires reliant entre eux les registres, les multiplexeurs permettant le choix entre l'écriture séquentielle et une écriture commune à tous les registres liés entre eux par les modules combinatoires ;
- dans certaines unités de calcul d'histogramme au moins, les modules combinatoires comportent un opérateur morphologique de dilatation comportant une unité logique " OU " à trois entrées dont la première reçoit le signal de sortie du registre de rang " Q ", la deuxième est reliée à la sortie d'une unité logique " ET " à deux entrées recevant respectivement le signal de sortie du registre de rang " Q+1 " et un signal de dilatation positive, la troisième est reliée à la sortie d'une unité logique " ET " à deux entrées recevant respectivement le signal de sortie du registre de rang " Q-1 " et un signal de dilatation négative ;
- dans certaines unités de calcul d'histogramme au moins, les modules combinatoires comportent un opérateur morphologique d'érosion comportant une unité logique " ET " à trois entrées dont la première reçoit le signal de sortie du registre de rang " Q ", la deuxième est reliée à la sortie d'une unité logique " ET " dont une inversée à quatre entrées recevant respectivement le signal de sortie du registre de rang " Q ", le signal de sortie du registre de rang " Q-1 ", le signal de sortie du registre de rang " Q+1 " et un signal d'érosion positive, la troisième est reliée à la sortie d'une unité logique " ET " à quatre entrées dont une inversée recevant respectivement le signal de sortie du registre de rang " Q ", le signal de sortie du registre de rang " Q-1 ", le signal de sortie du registre de rang " Q+1 " et un signal d'érosion négative ;

- dans certaines unités de calcul d'histogramme au moins, chaque module combinatoire comporte un multiplexeur associant un opérateur morphologique de dilatation, et un opérateur morphologique d'érosion ;

L'invention concerne un procédé de perception automatique d'un événement intervenant dans un espace par rapport à au moins un paramètre consistant à le digitaliser et à le fournir en entrée à une unité de calcul d'histogramme pour former un histogramme représentatif du paramètre et en déduire le résultat désiré.

L'invention concerne également un procédé d'analyse d'un paramètre représentatif d'un événement dans un dispositif électronique comprenant un calcul d'histogramme sur des données $a_{ijt}$ associées à des pixels formant ensemble un espace multidimensionnel évoluant dans le temps et représenté à une succession de moments, les données parvenant à l'unité de calcul sous la forme d'un signal DATA(A) numérique sous forme d'une suite $a_{ijt}$ de nombre binaire de n bits associé à des signaux de synchronisation permettant de définir le moment donné de l'espace et la position du pixel dans cet espace, auquel le signal $a_{ijt}$ reçu à un instant donné est associé dans lequel

- on associe à chaque donnée $a_{ijt}$ un signal binaire de classification dont la valeur dépend du résultat de la comparaison du signal DATA(A) avec le critère C de sélection,
- on constitue une répartition statistique des données $a_{ijt}$ pour un moment donné pour lesquelles un signal de validation global est positif, ledit signal de validation global étant constitué d'un ensemble de signaux de rétroannotation individuels chacun correspondant à un paramètre DATA(A), DATA(B),..., DATA(E), résultant de la comparaison entre un critère de rétroannotation R et de son signal de classification et étant positif.

L'invention sera décrite plus en détail en référence aux dessins annexés dans lesquels :

- la figure 1 est une représentation de l'unité de calcul d'histogramme selon l'invention, dans son contexte ;
- la figure 2 est une représentation du signal vidéo d'entrée, traité par le dispositif et le procédé de l' invention et des signaux de commande générés par un séquenceur ;
- la figure 3 est un diagramme représentant une unité passive de calcul d'histogramme ;
- la figure 4 est un diagramme représentant une unité de calcul d'histogramme autoadaptative selon l'invention avec les fonctionnalités d'anticipation et d'apprentissage ;
- la figure 5 est un diagramme représentant des signaux exploités par l'unité de calcul de la figure 4 ;
- la figure 6 est l'organigramme du logiciel de commande de l'unité de calcul de la figure 4 en mode maître ;

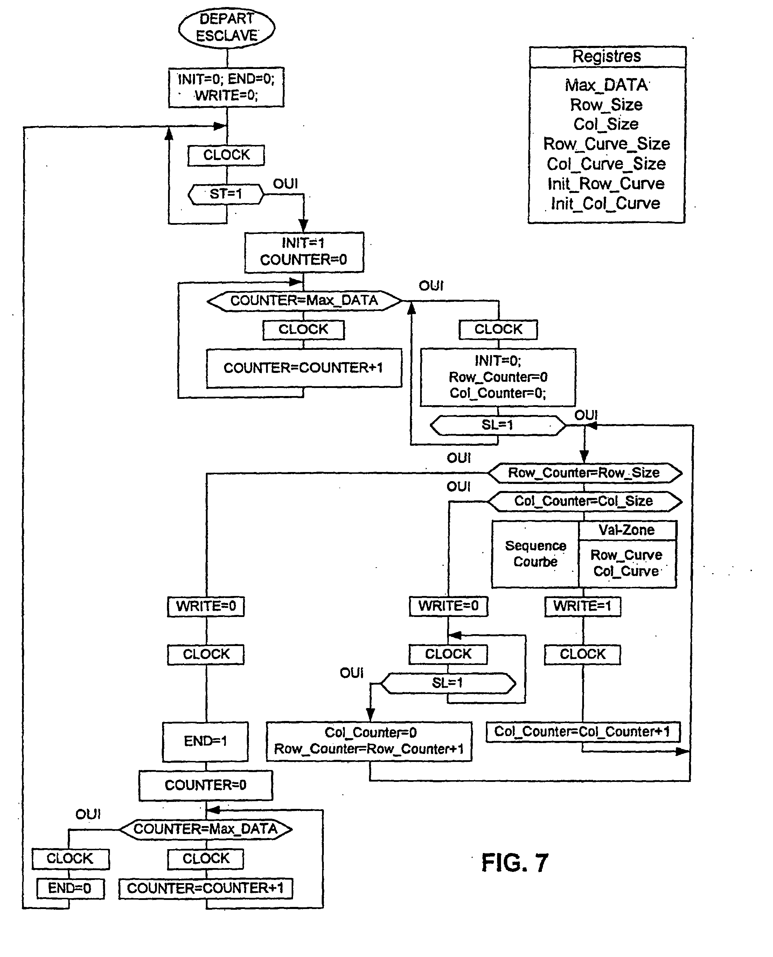

- la figure 7 est l'organigramme du logiciel de commande de l'unité de calcul de la figure 4 en mode esclave;

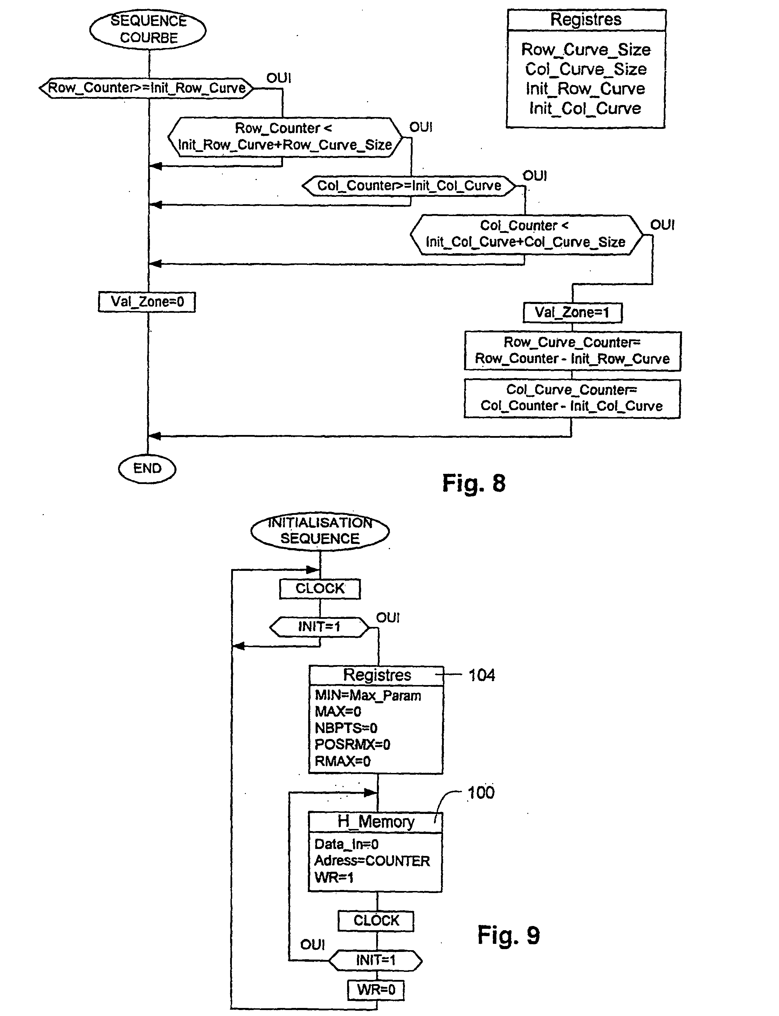

- la figure 8 est l'organigramme du logiciel d'insertion de la zone de courbe ;
- la figure 9 est l'organigramme du logiciel d'initialisation (génération de la commande « INIT ») ;

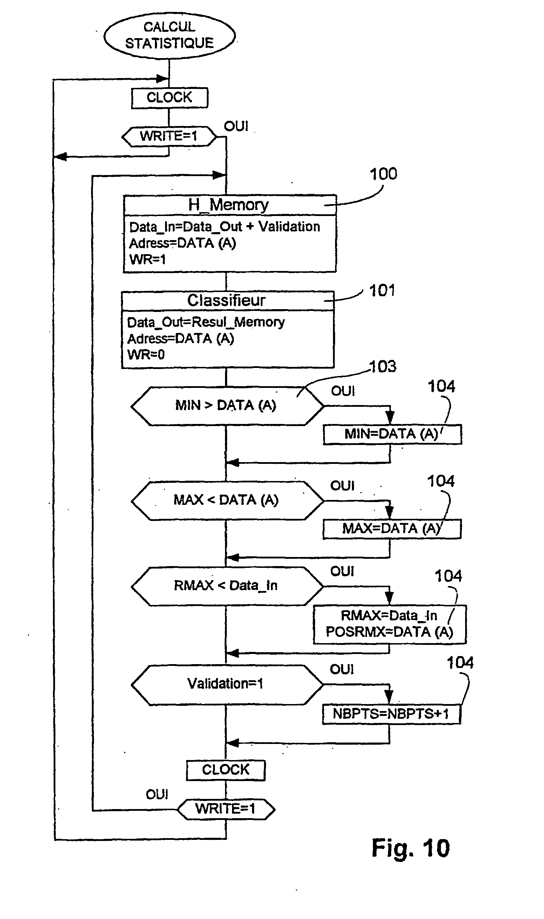

- la figure 10 est l'organigramme du logiciel de calcul de statistiques (utilisation de la commande « WRITE ») ;
- la figure 11 est l'organigramme de fin de traitement (utilisation de la commande « END ») ;
- la figure 12 est une représentation des éléments essentiels de l'unité de calcul d'histogramme ayant une fonctionnalité d'autoadaptation ;
- les figures 13 et 13c sont des représentations d'un calculateur de validation ayant plusieurs fonctionnalités d'autoadaptation ;
- les figures 13a et 13b sont des représentations de répartitions statistiques d'un paramètre et des critères classification ;
- la figure 14 est une représentation des éléments d'une unité de calcul d'histogramme produisant des valeurs POSMOY ;
- la figure 15 est un schéma représentant les éléments essentiels de l'unité d'histogramme autoadaptative avec anticipation selon une première méthode ;
- la figure 15a est une représentation analogue à la figure 15 mettant en oeuvre une première méthode d'anticipation généralisée ;
- la figure 16 est un schéma de la mémoire du classifieur ;
- la figure 17 est un schéma représentant les éléments essentiels de l'unité d'histogramme autoadaptative avec anticipation selon une deuxième méthode ;
- la figure 18 est une représentation détaillée de la mémoire du classifieur avec un automate de calcul élémentaire par bit;
- la figure 19 est une représentation d'un automate élémentaire de calcul de l'anticipation;
- la figure 20 est une représentation schématique de l'anticipation ;

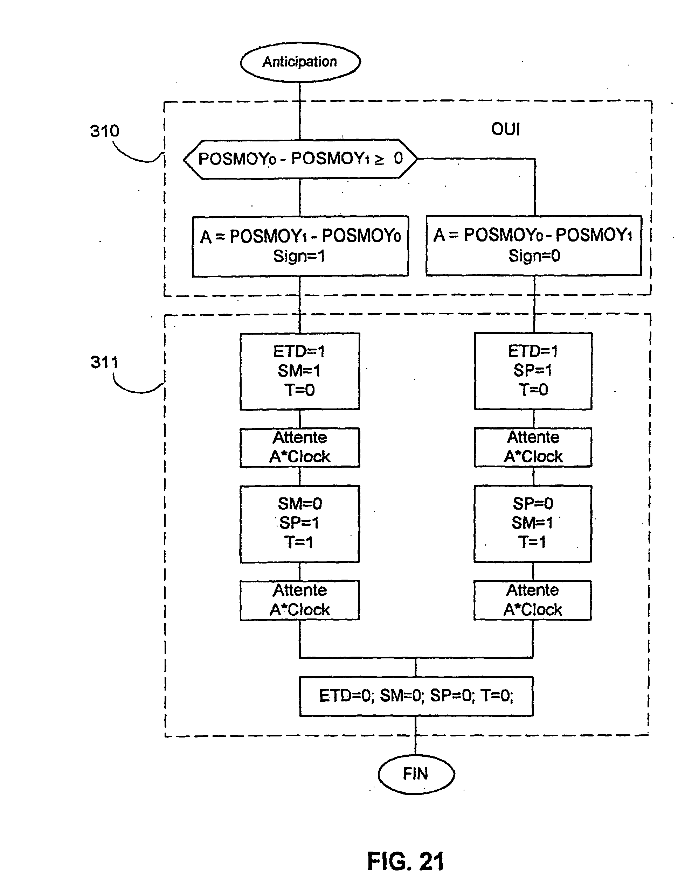

- la figure 21 est l'organigramme du logiciel de mise en oeuvre de l'anticipation ;
- la figure 22 est une représentation de l'unité de rétroannotation ;
- la figure 23 est une représentation synoptique d'une unité reprogrammable logique (FPGA) utilisée comme unité de rétroannotation ;

- la figure 24 est la représentation par registre, limitée à une rangée du circuit, de la figure 23 ;

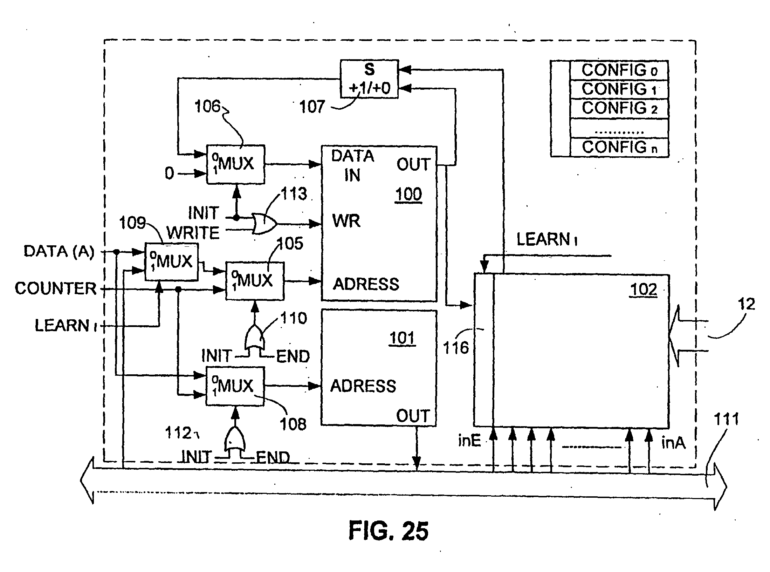

- la figure 25 est une représentation des éléments essentiels d'une unité de calcul d'histogramme permettant l'apprentissage ;
- les figures 26 et 27 sont des représentations schématiques d'un choix d'axe particulier ;
- la figure 28 est une représentation schématique du dispositif de visualisation statistique ;
- la figure 29 est un exemple du résultat de la visualisation produite par le dispositif de la figure 28 ;
- la figure 30 est la représentation de la mise en oeuvre d'une pluralité d'unités de calcul d'histogramme ;
- la figure 31 est la représentation de l'utilisation d'une unité de calcul d'histogramme unique programmable avec un multiplexeur permettant son exploitation pour une pluralité de paramètres ;
- la figure 31a est la représentation d'une unité de calcul d'histogramme aussi appelée neurone spatio-temporel électronique ;
- la figure 32 représente un ensemble d'unités de calcul d'histogramme à contrôle d'entrée programmable dans leur contexte d'utilisation constituant une unité fonctionnelle ;
- la figure 33 est une représentation synthétique d'une unité fonctionnelle avec le générateur de signal associé ;
- la figure 34 correspond à la figure 32 dans le cas d'une acquisition à deux sources ;
- la figure 35 correspond à la figure 33 dans le cas d'une acquisition binoculaire ;
- la figure 36 schématise un générateur de signal équipé d'une optique commandée ;
- la figure 37 présente le cas d'une acquisition à trois sources ;
- la figure 38 est une représentation de l'interface de gestion de l'application (API) ;
- la figure 39 représente un dispositif de traitement d'un signal sonore selon l'invention ;
- la figure 40 est une représentation simplifiée d'un dispositif selon l'invention.

L'invention peut être l'objet de réalisations nombreuses. Les informations exploitées peuvent être de natures variées et représenter des données ou paramètres multiples. Toutefois, sa première application est le traitement d'images, celles-ci constituant l'espace considéré. Il est bien entendu, alors, à deux dimensions. La description détaillée qui suit correspond à ce mode de réalisation particulier.

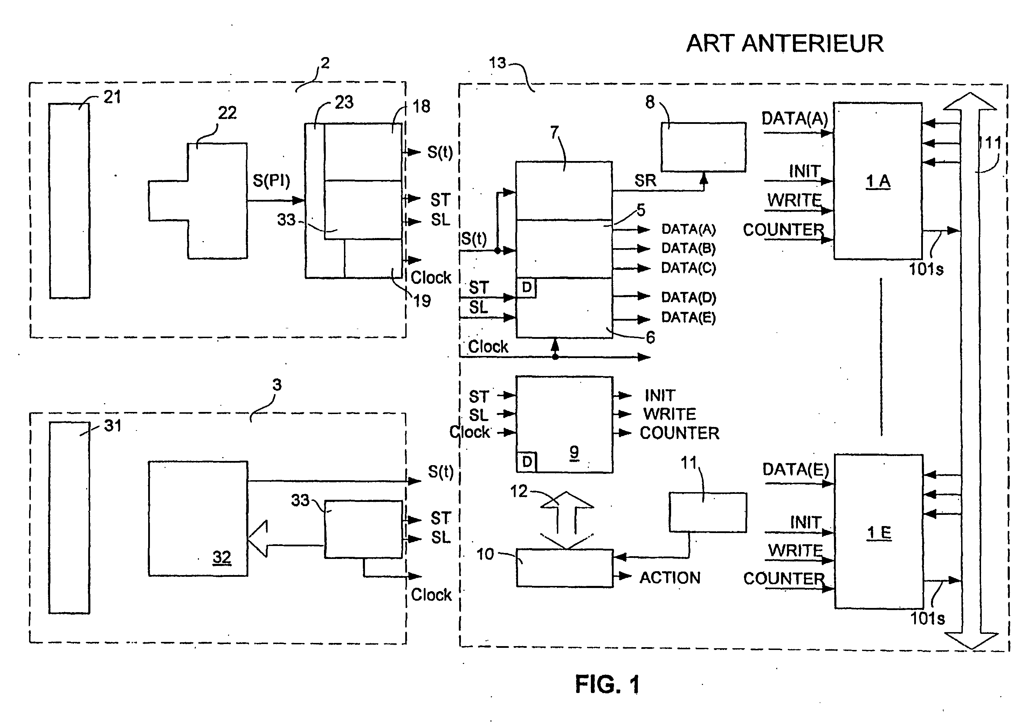

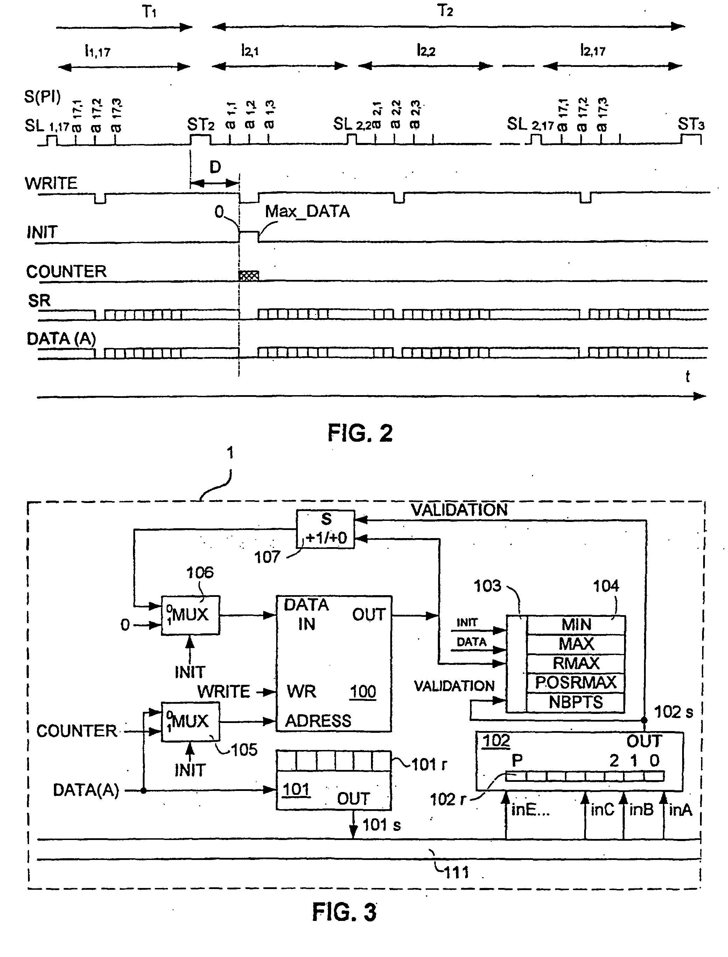

L'unité de calcul d'histogramme 1 de l'invention est représentée dans son contexte par les figures 1 et 2.

Cette unité de calcul d'histogramme 1 fait partie d'une unité de perception visuelle 13 qui reçoit et exploite un signal S(t) ou S(PI). L'unité de calcul d'histogramme exploite et génère une information dite rétroannotation S'(t) sur un bus 111. Plus précisément, la figure 1 représente plusieurs unités de calcul d'histogramme 1A, 1B,..., 1E associées dans une même unité de perception visuelle.

Dans un mode de réalisation, l'unité de perception visuelle 13 traite différents signaux concernant une ou des scènes visuelles. Dans d'autres modes de réalisation, l'unité de perception 13 traite d'autres paramètres de perception, par exemple des sons, des odeurs... La description qui suit concerne principalement la perception visuelle, l'adaptation à d'autres paramètres est possible.

Un séquenceur 9 génère, à partir de signaux de synchronisation ST, SL, CLOCK, des signaux de séquence INIT, WRITE et COUNTER qui commandent les unités de calcul d'histogramme.

Tels que représentés sur la figure 1, les signaux d'entrée du séquenceur 9 (SL, ST, CLOCK) peuvent provenir d'un ensemble générateur de signaux 2 comportant une caméra 22 ou d'un ensemble générateur de signaux 3 comportant un imageur CMOS 32.

Lorsque les signaux d'entrée proviennent d'un ensemble 2 comportant une caméra, cet ensemble impose des signaux de synchronisation de trames et de lignes de telle sorte que l'unité de calcul d'histogramme et son séquenceur 9 fonctionnent en mode esclave ou - synchronisation esclave -.

Au contraire, dans le cas où ces signaux proviennent d'un ensemble 3 comportant un imageur CMOS, le séquenceur 9 fonctionne en mode maître et génère lui-même les signaux de synchronisation.

Plus précisément, l'ensemble 2 permet l'acquisition de données provenant d'une scène 21 par une caméra 22. La caméra 22 produit un signal S(PI) dont la forme, du type de celle représentée sur la figure 2, sera décrite en détail plus loin.

L'unité électronique de commande 23 de la caméra 22 fournit alors les signaux S(t) résultant de l'extraction des signaux de synchronisation de S(PI), ST, SL et le signal d'horloge CLOCK issu d'une boucle à verrouillage de phase, qui sont utilisés par l'unité de calcul d'histogramme.

Dans le cas d'un ensemble 3 comportant un imageur CMOS, cet imageur 32 est utilisé pour l'acquisition de données de la scène 31, il fournit S(t) et est piloté par une unité de synchronisation 33 qui produit les signaux de synchronisation de trames ST et de synchronisation de lignes SL, ainsi que le signal d'horloge CLOCK utilisé aussi bien par l'imageur CMOS 32 que par les autres éléments de l'unité de perception visuelle 13.

Les unités de calcul d'histogramme 1 sont avantageusement coordonnées à une unité de traitement spatial 6 et temporel 5 qui a été décrite dans la demande de brevet WO-98/05002, et à une ligne à retard 7. L'unité de traitement spatial et temporel 5, 6 correspond au dispositif référencé 11 dans la demande de brevet citée. Il reçoit le signal S(PI) et génère des paramètres V (vitesse), DI (direction) correspondant chacun à l'une des données identifiées par DATA (A)... DATA(E) dans la présente demande.

Ces paramètres peuvent aussi être la résolution spatiale, la structure de l'image (variation du contraste multi-échelle en coordonnées polaires...), tels qu'ils résultent d'une analyse par ondelettes de Gabor et décrits dans l'article de Daugman, 1988, Complete Discrete 2D Gabor Transform..., IEEE Trans. Acoust. Speech Signal Process, 36: 1169-1179.

Cet ensemble, constitué par une unité de calcul d'histogramme 1, l'unité de traitement spatial et temporel 5, 6 et la ligne à retard 7, fournit soit des informations, généralement sous forme numérique, dites - de rétroannotation - exploitables par un dispositif aval, soit un signal permettant la visualisation des informations sur un écran 8 par l'intermédiaire du bus 111.

Une unité de calcul d'histogramme passive (non autoadaptative) et sans anticipation est représentée sur la figure 3.

Cette unité de calcul d'histogramme est destinée à traiter les valeurs d'un paramètre A qui sont affectées à chaque pixel dans un signal

$$S(t) = \{a_{ijT}\} \text{ de type vidéo}$$

Plus précisément, on appelle - signal S de type vidéo - un signal qui est composé d'une succession de trames, chaque trame consistant en une succession de pixels dont l'ensemble forme un espace, par exemple une image pour un espace à deux dimensions. Dans ce cas, les trames sont elles-mêmes décomposées en lignes et colonnes. Ce signal $S(t)$ porte une valeur $a_{ij}$ du paramètre A pour chacun des pixels $(i,j)$ exprimé sur n bits (n = 8 étant actuellement le plus souvent employé). La succession des trames représente donc la succession d'images dans le temps. Dans la notation $\{a_{ijT}\}$, T représente la trame, i est le numéro d'une ligne dans la trame T, j est le numéro de la colonne du pixel dans cette ligne, a est la valeur du paramètre A associée au pixel ijT.

Le signal S peut être un signal analogique. Toutefois, il est de préférence numérique et composé, tel que représenté sur la figure 2 d'une succession de trames $T_1$ et $T_2$, chacune étant formée d'une succession de lignes horizontales balayées telles que $I_{1.1}$, $I_{1.2}$,..., $I_{1.17}$ pour $T_1$ et $I_{2.1}$... pour $T_2$. Chaque ligne consiste en une succession de pixels ou de points-images PI.

S(PI) comprend un signal (ST) de synchronisation de trames au début de chaque trame, un signal (SL) de synchronisation de lignes au début de chaque ligne qui n'est pas également un début de trame. Ainsi, S(PI) comprend une succession de trames qui représente le domaine temporel et, à l'intérieur de chaque trame, une série de lignes et de pixels en colonnes qui sont représentatifs du domaine spatial.

Dans le domaine temporel, " des trames successives " désignent des trames se succédant dans le temps et " des pixels successifs à la même position " désignent les valeurs successives $a_{ij}$ associées respectivement aux pixels $(i, j)$ placés au même endroit dans les trames successives, c'est-à-dire par exemple (1, 1) de $I_{1.1}$ dans la trame $T_1$ et (1, 1) de $I_{2.1}$ dans la trame suivante correspondante $T_2$...

A partir du S(PI), tel qu'indiqué plus haut par référence à la demande PCT/FR-97/01354, l'unité de traitement spatial 6 et temporel 5 génère un ou plusieurs signaux DATA(A)... DATA(E).

L'unité de calcul d'histogramme passive et sans anticipation, telle que représentée sur la figure 3, exploite un signal DATA(A) dont la structure est représentée sur la figure 2. Ce signal peut provenir soit directement d'une caméra ou d'un système quelconque d'acquisition d'images, ou avoir préalablement subi un premier traitement, par exemple un traitement spatial et/ou temporel.

Elle génère un signal 101 s de même structure qui porte pour chaque pixel une information significative du résultat de l'application des critères de reconnaissance ou de sélection.

Tel que représenté sur la figure 3, l'unité de calcul d'histogramme 1 comporte une mémoire d'analyse 100, un multiplexeur d'adresses 105, un multiplexeur d'entrées de données 106, une unité de validation d'incrémentation 107, un classifieur 101, une unité de rétroannotation 102 et une unité de test 103 dont les fonctionnements seront décrits plus loin.

L'ensemble des éléments constituant l'unité de calcul d'histogramme sont commandés et synchronisés par un signal d'horloge (clock).

**I. La mémoire d'analyse 100**

Cette unité de calcul d'histogramme 1 comporte une mémoire d'analyse 100.

Cette mémoire d'analyse 100 est de préférence une mémoire numérique classique synchrone ou asynchrone telle qu'une DRAM ou une SDRAM. Cette mémoire a un nombre n d'adresses d égal au nombre de niveaux possibles pour les valeurs du paramètre A qui doivent être discriminées.

Chacune de ces adresses peut stocker au moins le nombre de pixels contenu dans une trame (c'est-à-dire dans une image).

A chaque trame, après une remise à zéro rapide par le signal de commande INIT, un signal WRITE valide, pendant toute la trame, le traitement de la donnée DATA(A). Ainsi, la mémoire d'analyse 100 est susceptible de recevoir le signal DATA(A). Pour chaque trame reçue, les pixels pour lesquels la valeur du paramètre A a une valeur $a_{ij} = d$ (s'ils sont validés par le signal de validation 102s qui sera décrit plus loin), incrémentent le contenu de l'adresse de rang d de la mémoire 100 d'une valeur 1. Ainsi, après avoir reçu une trame complète, la mémoire 100 comporte, à chacune de ses adresses d, le nombre de pixels qui sont validés et pour lesquels le paramètre A a une valeur d.

## II. Les multiplexeurs d'adresses et d'entrées de données

L'unité de calcul d'histogramme 1 comprend aussi un multiplexeur d'adresses 105, un multiplexeur d'entrées de données 106.

Chacun de ces multiplexeurs comporte une commande de sélection binaire, deux entrées et une sortie.

La sortie du multiplexeur a pour valeur celle de l'une des entrées lorsque la commande de sélection vaut 1 et l'autre lorsqu'elle vaut zéro.

Lorsque le signal de commande INIT est égal à zéro, le multiplexeur d'adresses 105 sélectionne une adresse dans la mémoire d'analyse 100 en fonction du niveau d du signal ($a_{ijT}$) reçu, le multiplexeur d'entrées de données 106 transfert l'incrémentation de la valeur contenue dans cette mémoire en fonction de l'état de sa commande de sélection.

Lorsque le signal de commande INIT est égal à 1, le multiplexeur d'adresses 105 transfert le signal du compteur qui incrémente l'adresse de zéro à la valeur maximum de DATA(A). Le multiplexeur d'entrées de données 106 force zéro sur l'entrée de la mémoire 100.

## III. L'unité d'incrémentation

L'unité de calcul d'histogramme comporte également une unité d'incrémentation 107.

Il s'agit d'un incrémenteur commandé comportant une entrée, une commande et une sortie.

La sortie de l'unité d'incrémentation est égale à la sortie de la mémoire d'analyse 100 si le signal de validation 102s est égal à zéro, elle est égale à cette même valeur augmentée de 1 dans le cas contraire.

## IV. Le classifieur

L'unité passive de calcul d'histogramme comporte également un classifieur passif 101 qui comporte un registre 101r susceptible de mémoriser certaines des valeurs de niveaux possibles ($d_1$, $d_2$,...) des niveaux du paramètre A.

Le classifieur 101 reçoit le signal DATA(A) et effectue un tri des pixels fournissant, sur sa sortie 101s, une valeur 1 lorsque le paramètre A associé audit pixel a un niveau correspondant à celui contenu dans le registre 101r ($d_1$, $d_2$,...) et la valeur zéro dans le cas contraire.

La sortie du classifieur 101 est reliée à un bus 111.

## V. L'unité de rétroannotation

L'unité de calcul d'histogramme comporte encore une unité de rétroannotation 102.

Cette unité de rétroannotation 102 est reliée au bus 111. Elle comporte au moins un registre 102r et reçoit pour chaque pixel des signaux DATA(A), les valeurs ($in_E$,..., $in_B$, $in_A$) de sortie des classifieurs 101 des différentes unités de calcul d'histogramme auto-adaptatives reliées au bus 111.

Cette unité de rétroannotation compare les valeurs ainsi reçues à celles contenues dans son registre 102r et émet, sur sa sortie 102s, pour chaque pixel, un signal de validation égal à 1 lorsqu'il y a coïncidence entre les valeurs du registre égales à 1 et les données correspondantes reçues du bus 111, et une valeur zéro dans le cas contraire, ce qui correspond à la fonction booléenne suivante :

$$out = (\overline{in_0} + Reg_o).(\overline{in_1} + Reg_1)...(\overline{in_n} + Reg_n)(in_o + in_1 + ...in_n)$$

## VI. L'unité de test et le registre de sortie d'analyse

L'unité de calcul d'histogramme comprend également une unité de test 103 recevant les informations sortant de la mémoire d'analyse 100 et reliée à des registres de sortie d'analyse 104.

Les registres de sortie d'analyse 104 sont destinés à recevoir des informations statistiques élaborées sur les valeurs du paramètre A du signal DATA(A) pour chaque trame.

Il peut s'agir par exemple des valeurs minimum (MIN) et maximum (MAX) du paramètre A, du nombre d'occurrences (RMAX) de la valeur la plus représentée et de la position (POSRMAX) de cette valeur, ainsi que du nombre (NBPTS) de points pour lesquels des informations ont été reçues.

L'unité de test 103 met à jour les registres de sortie d'analyse 104 en fonction des informations qu'il reçoit.

L'unité de validation d'incrémentation 107 produit également en sortie un signal adressé sur l'unité de test 103 lui permettant d'incrémenter le registre de sortie d'analyse 104 dans l'hypothèse favorable.

On comprend ainsi qu'après l'exploitation d'une trame complète, l'unité de calcul d'histogramme 1 a produit des informations statistiques représentatives de cette trame, disponibles dans le registre de sortie d'analyse 104 et exploitables à toutes fins utiles, soit pour une visualisation accessible à l'opérateur, soit pour exploitation par tout autre programme ou automate.

Les registres de sortie d'analyse 104 comportent des mémoires pour chacune des caractéristiques-clés qui incluent le minimum (MIN) de l'histogramme, le maximum (MAX) de l'histogramme, le nombre de points (NBPTS) de l'histogramme, la position (POSRMAX) du maximum de l'histogramme et le nombre de points (RMAX) au maximum de l'histogramme. Ces caractéristiques sont déterminées en parallèle avec la formation de l'histogramme par l'unité de test 103, de la manière suivante :

Pour chaque pixel qui est validé:

(a) si la valeur du paramètre DATA(A) du pixel < MIN (qui est initialement fixée à la valeur maximale de DATA(A) possible de l'histogramme), alors la valeur du paramètre est inscrite dans MIN ;

(b) si la valeur du paramètre DATA(A) du pixel > MAX (qui est initialement fixée à la valeur minimale de DATA(A) possible de l'histogramme), alors la valeur du paramètre est inscrite dans MAX ;

(c) si le contenu de la mémoire 100 à l'adresse de la valeur du paramètre du pixel > RMAX (qui est initialement fixée à la valeur minimale DATA(A) possible de l'histogramme), alors i) écrire la valeur du paramètre dans POSRMAX et ii) écrire la sortie de la mémoire dans RMAX ;

(d) augmenter NBPTS (qui est initialement fixé à la valeur zéro) d'une unité.

**VII. Fonctionnement d'ensemble de l'unité de calcul d'histogramme passive**

Plusieurs unités de calcul d'histogramme 1A, 1B... 1E sont donc reliées au même bus de rétroannotation 111. La présente description est faite en référence à cinq unités de calcul d'histogramme A à E. On comprend que la généralisation à un nombre quelconque d'unités peut être faite.

**A. Signal WRITE**

Pendant chaque signal WRITE, chacune d'elles fournit au bus, pour chaque pixel, le signal de sortie 101 s de son classifieur 101 et elles reçoivent chacune l'ensemble de ces signaux sur l'entrée $in_A$,..., $in_E$ de leur unité de rétroannotation 102.

La valeur du paramètre, par exemple DATA(A) pour l'unité 1A, est comparée au contenu du registre 101r du classifieur 101. Le résultat inA = 101 s de cette comparaison est un signal binaire qui est adressé en même temps que ses homologues inB...inE provenant des autres unités 1B...1E.

L'unité de rétroannotation 102 compare ces valeurs prises ensemble au contenu de son registre 102r constituant un critère R de rétroannotation et génére, sur sa sortie 102s, un signal binaire dont la valeur dépend du résultat de la comparaison.

Ce signal 102s commande l'incrémenteur 107. Lorsqu'il est égal à 1, il produit, par l'intermédiaire du multiplexeur de données 106, l'incrémentation d'une unité du contenu du registre de la mémoire 100 correspondant à la valeur du paramètre DATA(A), simultanément l'unité de test 103 assure l'exploitation statistique du contenu de la mémoire 100 et en transfert le contenu dans le registre de sortie d'analyse 104.

A la fin du signal WRITE, les registres de la mémoire 100 contiennent chacun pour valeur d, le nombre de pixels pour lesquels le signal DATA (A) avait la valeur d correspondante et que l'unité de rétroannotation a validé.

**B. Signal INIT**

Pendant le signal INIT, le signal COUNTER qui balaie les valeurs de 0 à n, assure la remise à zéro des registres de la mémoire 100.

## VIII. L'auto-adaptation

Dans la description faite jusqu'à présent, la mémoire du classifieur 101 est un registre 101r dont le contenu déterminé de l'extérieur du système est fixe. Ce classifieur est alors dit passif.

L'autoadaptation consiste en l'actualisation automatique, par le système lui-même, du contenu de la mémoire du classifieur, ce contenu étant alors une table de transcodage (LUT - Look Up Table). On obtient ainsi une unité de calcul d'histogramme 1 autoadaptative.

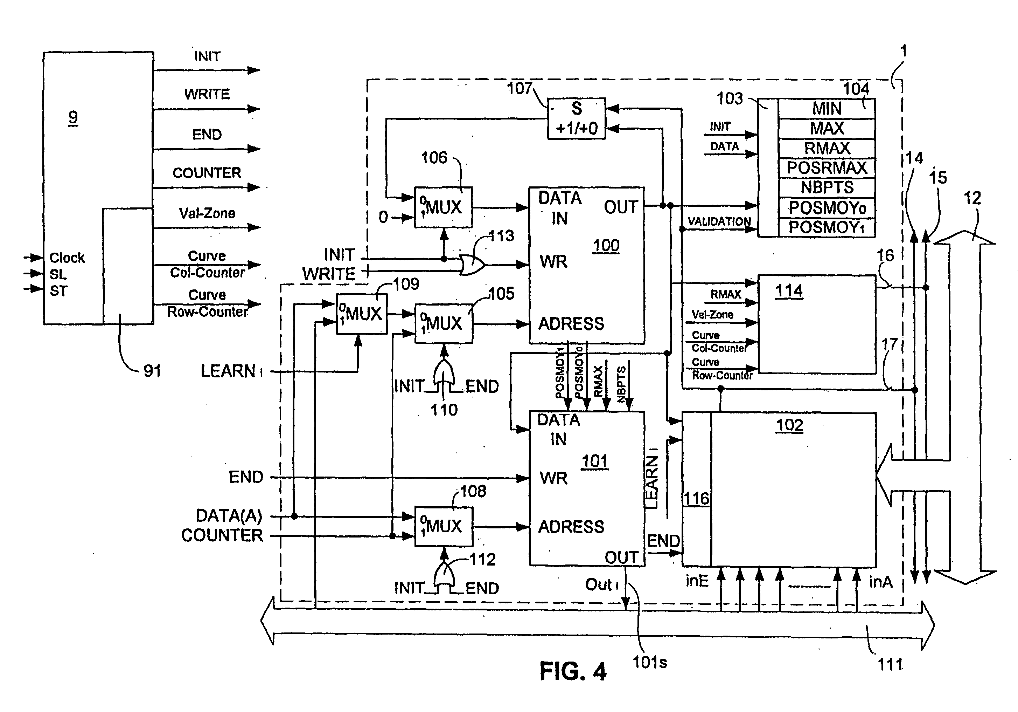

Pour assurer la fonction d'autoadaptation, c'est-à-dire de mise à jour en temps réel du classifieur, l'unité de calcul d'histogramme de la figure 3 est perfectionnée conformément à la figure 4.

Au lieu d'avoir un simple registre 101r écrit de l'extérieur du système, le classifieur 101 a une mémoire adressable dont l'écriture est commandée par un signal END.

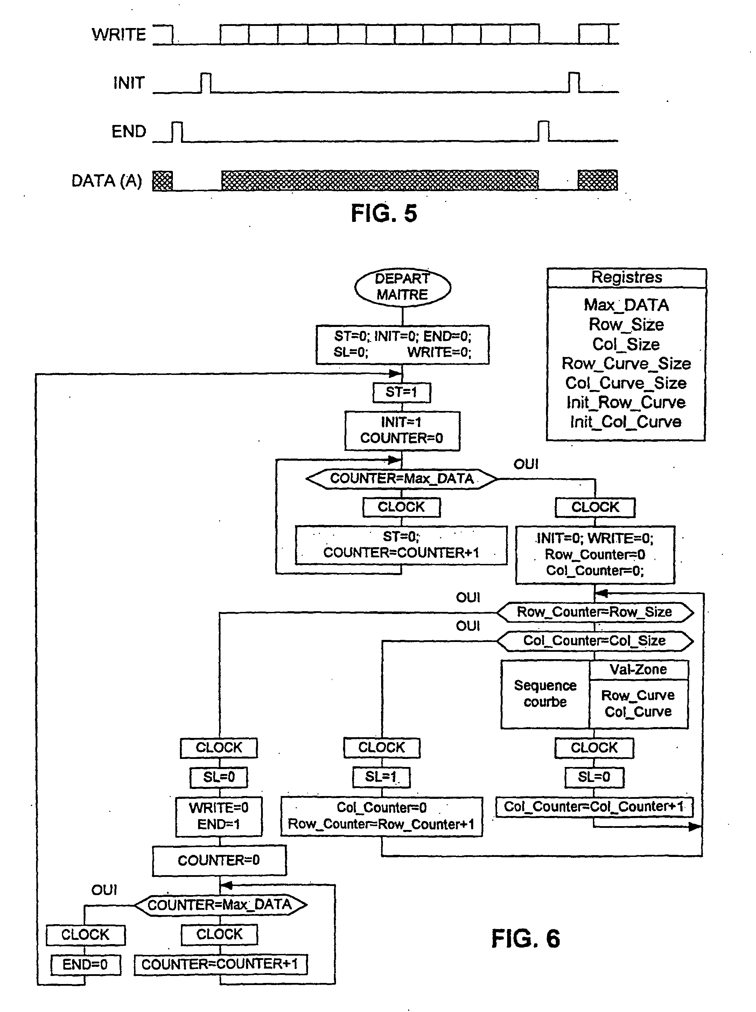

Le séquenceur 9 génère ce signal END représenté sur la figure 5. L'unité de calcul d'histogramme comporte un opérateur de sélection OU 110 recevant en entrée les signaux INIT et END et relié en sortie à la commande du multiplexeur d'adresses 105.

La mémoire du classifieur 101 est commandée par le système lui-même. Son contenu est modifiable, elle comporte une entrée de données DATA IN, une commande d'écriture WR et une entrée d'adresses ADRESS.

Cette entrée d'adresses est reliée à la sortie d'un multiplexeur d'anticipation 108. Ce multiplexeur 108 de type " deux vers un " comporte une commande d'anticipation reliée à la sortie d'un opérateur OU 112 recevant en entrée les signaux INIT et END.

Les entrées du multiplexeur d'anticipation reçoivent les mêmes signaux que les entrées du multiplexeur d'adresses 105 (DATA(A) et COUNTER).

Lorsque le signal END vaut 1, la mémoire du classifieur est écrite par un signal résultant de la comparaison entre la valeur de la mémoire 100 d'histogramme et une valeur issue du registre de sortie d'analyse 104 (RMAX/2) pour toutes les valeurs possibles de DATA(A)).

Ainsi, le classifieur assure une fonction de classification $f_A$ qui est la relation qu'il établit entre les données DATA(A) qu'il reçoit et la valeur binaire de sortie $(101s)_A$ qu'il produit, par la mémoire du classifieur 118.

On a ainsi réduit la représentation de l'information qui occupe un bit unique.

## A. Classifieur premier mode de réalisation

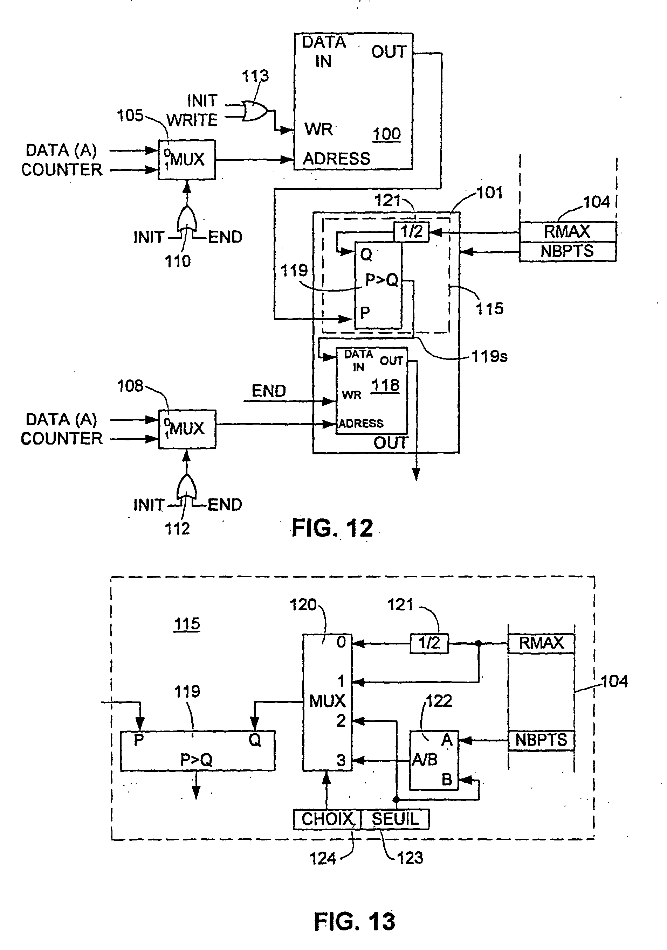

En référence à la figure 12, le classifieur 101 assurant l'autoadaptation comporte une mémoire 118 dont l'entrée d'écriture WR reçoit le signal END, l'entrée d'adresses ADRESS reçoit le signal de sortie du multiplexeur d'adresses 108. Il comporte de plus un comparateur 119 comportant deux entrées et une sortie, celle-ci étant reliée à l'entrée de données DATA IN de la mémoire 118.

La première entrée du comparateur 119 reçoit la valeur RMAX/2 produite par un registre de sortie d'analyse 104 et, sa deuxième entrée reçoit la sortie de la mémoire 100.

Le fonctionnement de la mémoire 118 du classifieur est alors le suivant.

Elle comporte le même nombre de mots que la mémoire d'analyse 100 mais dans la mémoire 118, chaque mot ne comporte qu'un seul bit.

A la fin (signal END = 1) de la réception d'un nouveau flux de données DATA(A) d'une trame, une séquence d'écriture commence.

Lorsque pour une mémoire donnée d de la mémoire d'analyse 100, la valeur lue est supérieure à RMAX/2, une valeur 1 est inscrite dans la mémoire 118 à la position correspondante. Dans le cas contraire, la valeur 0 est inscrite à cette position. L'ensemble des mémoires d est balayé de 0 à n. La mémoire 118 du classifieur 101 a ainsi été mise à jour.

## B. Classifieur deuxième mode de réalisation

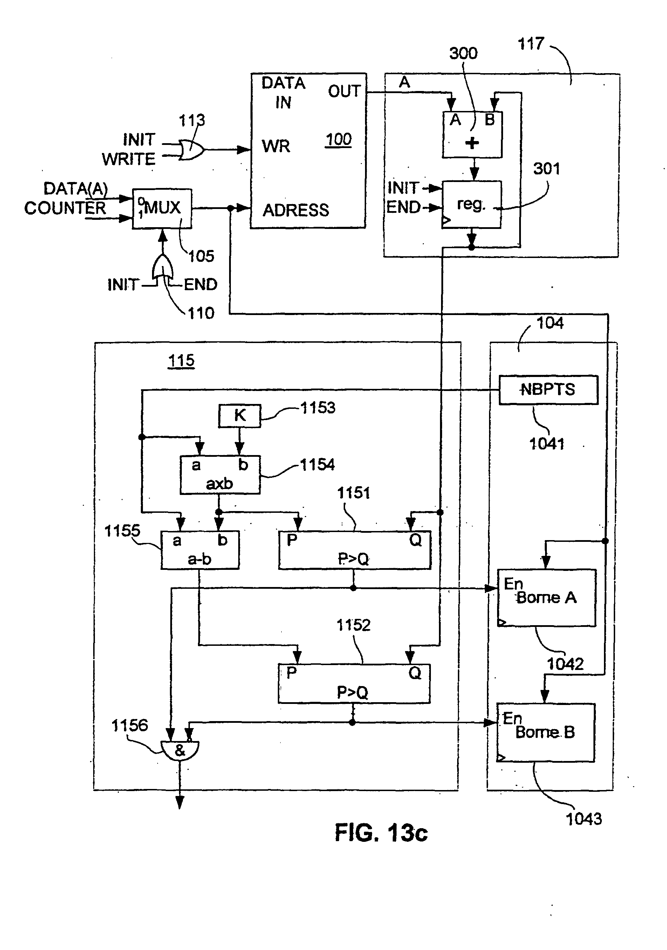

La figure 13 représente un mode de réalisation alternatif du classifieur dans lequel un multiplexeur 120 est commandé par une commande de choix 124 et permet la comparaison du paramètre P à une valeur statistique Q, qui peut être élaborée de différentes manières en fonction des paramètres statistiques reçus sur ses différentes entrées 0, 1, 2, 3 qui sont sélectionnées par la commande de choix 124. La commande de choix dépend du contenu du registre " CHOIX ". L'entrée 0 du multiplexeur 120 reçoit la valeur RMAX/2 produite à partir des données du registre de sortie d'analyse 104 par le diviseur par 2, 121, l'entrée 1 du multiplexeur 120 reçoit directement la valeur RMAX, l'entrée 2 du multiplexeur 120 reçoit une valeur de seuil contenu dans un registre " SEUIL " 123 dont le contenu est programmé de l'extérieur du système, l'entrée 4 de ce multiplexeur reçoit le quotient du nombre de points NBPTS par le SEUIL produit par le diviseur 122.

Donc tel que représenté sur la figure 13, le paramètre P peut être comparé aux valeurs respectives RMAX/2, RMAX, à un seuil B entré depuis l'extérieur et au rapport du nombre de points NBPTS rapporté à ce seuil par le diviseur 122.

Le contenu de la mémoire 118 est mis à jour, en fonction des signaux fournis par le comparateur 119 de manière analogue à la mise à jour décrite dans le premier mode de réalisation.

## C. Classifieur troisième mode de réalisation

Les figures 13a, 13b, 13c représentent un troisième mode de réalisation dans lequel on utilise le cumul des occurrences dans l'histogramme au lieu des niveaux de ceux-ci. Les bornes de classification sont définies par exemple par l'utilisation d'un registre RMAX, correspondant au maximum d'occurrences du paramètre analysé et en recherchant les valeurs du paramètre pour RMAX/2. De part et d'autre de la position de RMAX, ces valeurs correspondent aux borne A et borne B du classifieur.

Ainsi, le registre RMAX tel qu'il est exploité dans le deuxième mode de réalisation du classifieur, est ici remplacé par le registre NBPTS, correspondant au cumul total des occurrences (figure 13a). En supprimant un pourcentage k de NBPTS de part et d'autre de l'histogramme. Les bornes A et B deviennent plus stables (figure 13b).

Le dispositif représenté sur la figure 13c exécute cette fonction.

Sur cette figure 13c, on retrouve la mémoire d'analyse 100 et les moyens d'entrée des données par l'intermédiaire du multiplexeur 105. On exploite des registres de sortie d'analyse 104 comportant comme décrit plus haut le nombre de points NBPTS 1041 et généralement également des borne A 1042 et borne B 1043.

Le registre d'apprentissage 117 recevant les données de sortie de la mémoire d'analyse 100 alimente, par l'intermédiaire du registre 301 alimenté par l'additionneur 300, les entrées de deux comparateurs, respectivement 1151 et 1152 du calculateur de validation 115. Ce calculateur de validation 115 comporte une mémoire 1153 contenant la valeur k, pourcentage du nombre de points à prendre en considération. Un multiplicateur 1154 recevant le nombre de points NBPTS sur l'une de ses entrées et la valeur k sur l'autre alimente d'une part la deuxième entrée du comparateur 1151 et d'autre part l'une des entrées d'un soustracteur 1155 alimenté sur son autre entrée par le nombre de points. La sortie de ce soustracteur 1155 alimente la deuxième entrée du comparateur 1152.

La sortie du comparateur 1151 fournit la borne A, la sortie du comparateur 1152 fournit la borne B et un opérateur ET inversé 1156 recevant sur chacune de ses entrées, respectivement la valeur de la borne A et sur l'entrée inversée la valeur de la borne B, fournit le signal de sortie du calculateur de validation 115.

En fin de calcul d'histogramme, le registre NBPTS est connu et un signal Fin-Trame permet de connaître la valeur $\alpha = k.NBPTS$ et une valeur $\beta = NBPTS-\alpha$.

En initialisant à zéro une fonction de cumul S, soit $S_o$ = zéro, l'incrément i d'un compteur connecté sur l'adresse de la mémoire histogramme précédemment calculée permet de lire le contenu de cette mémoire, et d'alimenter le registre de cumul $S_i$.

Un premier test consiste à assigner à Borne A, la valeur d'incrément i tant que $S_i$ est plus petit que la valeur $\alpha$ précédemment définie.

Un second test consiste à assigner à Borne B, la valeur d'incrément i tant que $S_i$ est plus petit que la valeur $\beta$ précédemment définie.

De manière générale, on comprend que le classifieur peut être réalisé selon de nombreux modes, l'essentiel étant qu'il permette de situer le paramètre DATA(A) par rapport à des valeurs ou bornes statistiquement déterminées sur un ensemble de données DATA(A) précédentes.

## IX. La mémoire 118 du classifieur 101

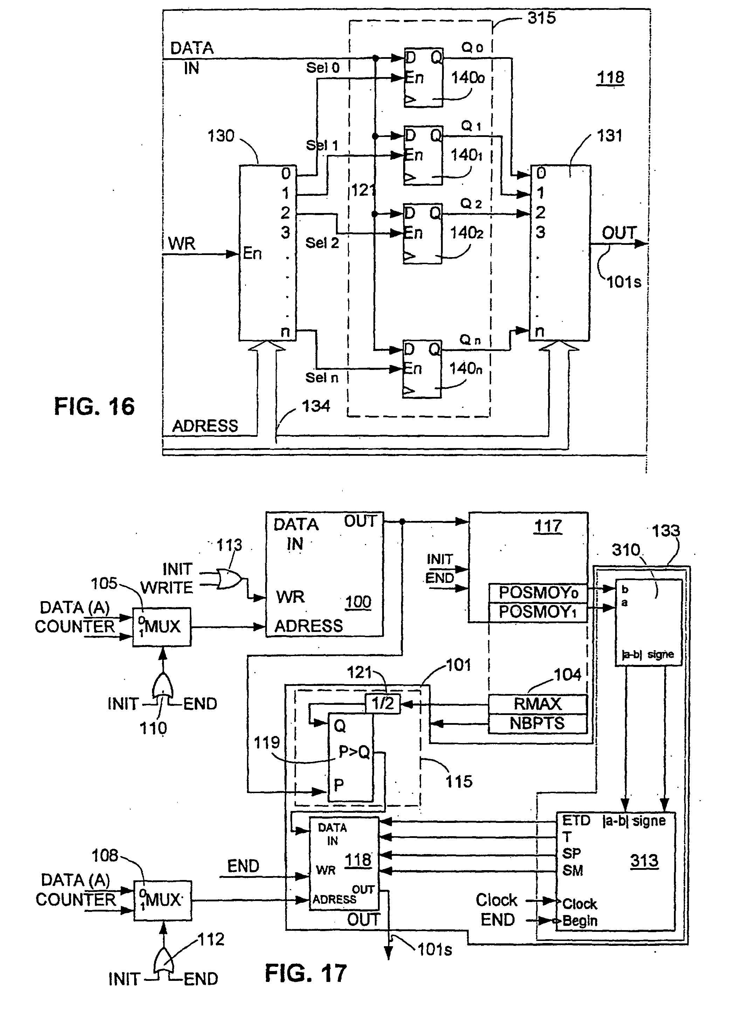

La figure 16 est une représentation détaillée de la mémoire 118 faisant apparaître un démultiplexeur avec validation d'entrée 130 et un multiplexeur de sortie 131. Le démultiplexeur d'entrée 130 recevant le signal d'écriture WR est donc à même de valider le choix du registre de la mémoire 118, sélectionné par la commande d'adresse ADRESS, pour l'écriture de la valeur binaire de la comparaison DATA IN. Le multiplexeur 131 de sortie adresse la valeur d'un registre particulier, sélectionné par la commande d'adresse ADRESS, sur la sortie 101 s de la mémoire 118 du classifieur.

Le démultiplexeur d'entrée 130 et le multiplexeur de sortie 131 sont commandés par le bus 134 issu du multiplexeur d'anticipation 108.

Plus précisément, le démultiplexeur 1/n d'entrée 130, commandé par l'adresse transmise par le bus 134, envoie le signal WR (WRITE), respectivement sous la forme des signaux $Sel_o$, $Sel_1$, $Sel_2$,..., Seln sur les registres $140_o$, $140_1$, $140_2$,..., $140_n$ de rang 0, 1... , n et détermine celui de ces registres dans lequel le contenu de l'information transmise par le signal DATA IN est adressé. En sortie, les informations provenant de ces registres $140_o$, $140_1$, $140_2$,..., $140_n$ sont adressées sur le multiplexeur 131 qui les dirige sur sa sortie OUT.

## X. L'anticipation

Dans une forme de réalisation préférée, en plus de la mise à jour en temps réel, l'unité 1 de constitution d'histogramme assure une fonction d'anticipation.

Cette anticipation de l'autoadaptation du classifieur 101 améliore le fonctionnement de ce système bouclé et le rapproche d'un fonctionnement d'un système physiologique.

Le but de l'anticipation est, comme son nom l'indique, d'anticiper la valeur contenue dans la mémoire 118 du classifieur de façon à accélérer le traitement et, par là, à faciliter le suivi d'un objet ou de son évolution.

A cet effet on recourt d'abord à un calcul de la variation global de l'histogramme dont le résultat est, ensuite, utilisé pour appliquer l'anticipation selon l'une ou l'autre des méthodes suivantes. Dans tous les cas, l'anticipation définit une fonction d'anticipation $g_A$ qui, combinée à la fonction de classification $f_A$, produit une fonction $(f_A o g_A)$ reliant les données DATA(A) et la valeur de sortie $(101s)_A$ caractérisant l'unité de traitement d'histogramme traitant le paramètre A.

## A. Calcul de la variation globale de l'histogramme

L'unité de test 103 et les registres 104 de sortie d'analyse génère alors une valeur statistique POSMOY dont les valeurs $POSMOY_0$ et $POSMOY_1$ pour deux trames successives sont mémorisées. POSMOY est la valeur du paramètre DATA(A) par rapport à laquelle, dans une trame donnée, ledit paramètre a une valeur supérieure ou égale pour la moitié des points validés de la trame et une valeur inférieure pour l'autre moitié.

Préparation

Lorsque le signal END vaut 1, la nouvelle valeur $POSMOY_o$ est calculée et la valeur précédente de $POSMOY_o$ est sauvegardée en $POSMOY_1$.

POSMOY

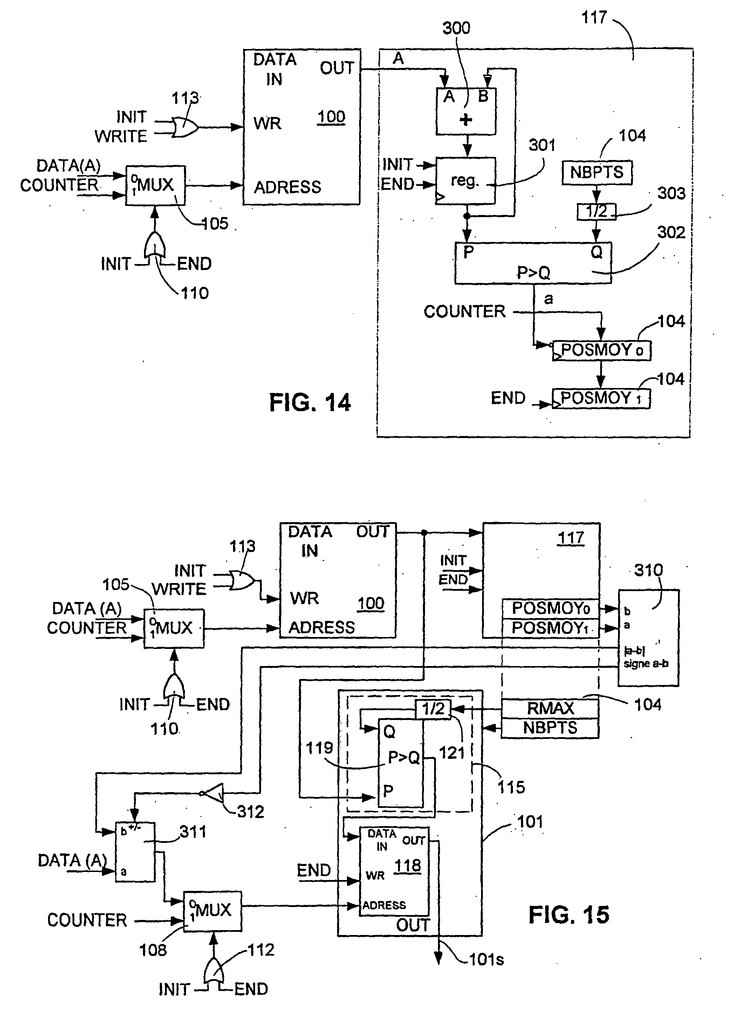

En référence à la figure 14, on décrira maintenant l'élaboration de la variable $POSMOY_o$.

Cette variable $POSMOY_o$ est produite par un comparateur 302.

Ce comparateur 302 reçoit, sur l'une de ses entrées Q, le paramètre NBPTS qui est divisé par deux par le diviseur 303.

Sa deuxième entrée P est alimentée par la sortie d'un registre 301 qui est commandé par les signaux d'initialisation INIT et de fin END, et reçoit en entrée la sortie d'un additionneur 300 qui reçoit lui-même en entrée, la valeur de sortie du registre 301 et sur sa deuxième entrée, la valeur de sortie de la mémoire 100 qui a été précédemment décrite.

Ainsi, le registre 301, initialement remis à zéro, mémorise le cumul du contenu des registres de la mémoire qui sont balayés par le signal COUNTER de zéro à n.

Tant que ce cumul est inférieur à NBPTS/2, la valeur du COUNTER est mémorisée dans $POSMOY_o$. A la fin du cycle END, $POSMOY_o$ contient donc la dernière valeur COUNTER pour laquelle le cumul est inférieur à NBPTS/2.

## B. Application de la variation de l'histogramme à l'anticipation (1ère méthode)

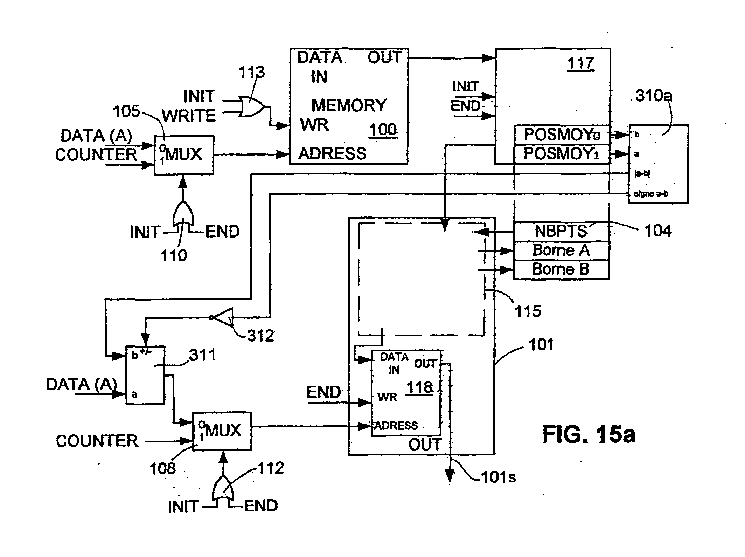

Cette première méthode est représentée sur la figure 15. La mémoire 118 est celle décrite précédemment en référence à la figure 16.

Un automate 310 dit - unité de calcul de valeur absolue avec extraction de signe - fournit les valeurs $|POSMOY_o - POSMOY_1|$ et le signe de cette différence.

Ces paramètres commandent un translateur 311 après inversion du signe par l'inverseur 312.

La valeur du paramètre alimentant la mémoire 118 est ainsi décalée de la valeur $|POSMOY_o - POSMOY_1|$ par rapport au fonctionnement passif, dans le sens opposé à la variation de POSMOY calculée dans l'unité 310.

La figure 15a représente un circuit alternatif permettant la mise en oeuvre de la première méthode d'application de la variation de l'histogramme à l'anticipation. Dans ce mode de réalisation, l'unité de calcul 310a est analogue à l'unité de calcul 310 mais elle offre des possibilités plus souples de décalage de la valeur du paramètre fourni à la mémoire 118. Alors que l'unité de calcul 310 de la figure 5 produit un décalage déterminé par une fonction de la forme $y = x$ où x est $(POSMOY_o - POSMOY_1)$, l'unité de calcul 310a fournit un décalage déterminé par des fonctions de la forme $y = ax + b$, dans laquelle a (par exemple k1 et k2) et b (par exemple c1 et c2) sont des constantes ajustables qui peuvent être fournies par un processeur.

On comprend qu'ainsi, toute autre fonction agissant sur les valeurs POSMOY peuvent être utilisées si voulu

tel que $y = ax^2$. Sur la figure 15a, le multiplexeur 127 reçoit en entrée les deux fonctions de POSMOY, c'est-à-dire k1 x $(P_o - P_1)$ + c1 et k2 x $(P_o - P_1)$ + c2, et fournit une sortie fondée sur la valeur du signal de contrôle « CLOCK ».

Pour augmenter le domaine de classification, le circuit OU 125 et le circuit de retard 126 peuvent être utilisés. Le circuit de retard est contrôlé par le même signal d'horloge qui contrôle le multiplexeur 127. Les valeurs de sortie de la mémoire 118 reliées aux deux fonctions différentes de décalage sont alors fournies à la porte OU 125 dont la sortie est le signal 102s avec un domaine de classification amélioré, ce qui améliore l'anticipation.

### C. Application de la variation de l'histogramme à l'anticipation (2ème méthode)

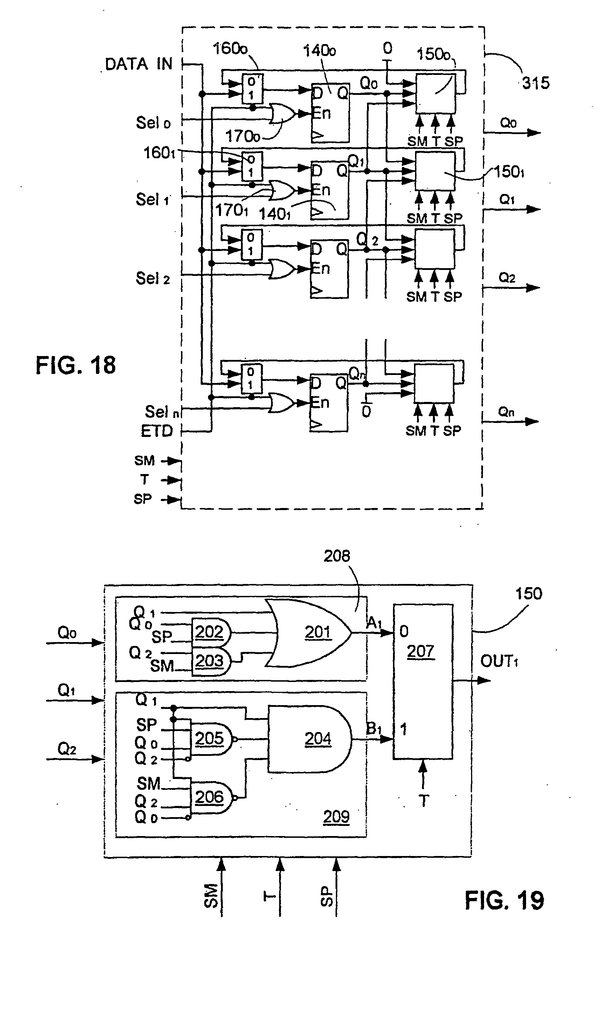

Cette deuxième méthode est représentée sur la figure 17. La mémoire 118 est alors celle représentée sur la figure 18.

L'architecture générale de la mémoire 118 est celle déjà décrite plus haut. Nous décrirons une séquence pour 1 bit donnée, les autres étant analogues. Les éléments communs à la figure 16 portent les mêmes références.

Le registre $140_1$ est associé à un multiplexeur d'entrées 2/1 $160_1$ qui reçoit sur l'une de ses entrées, le signal binaire sortant du comparateur 119 et sur l'autre de ses entrées, le signal de sortie de l'automate de calcul d'anticipation $150_1$.

Le multiplexeur d'entrée 160, est commandé par le signal ETD qui commande également l'écriture.

A cet effet, la commande d'écriture du registre 140, est reliée à un opérateur OU $170_1$ qui reçoit, sur l'une de ses entrées, le signal ETD et sur l'autre, un signal $Sel_o$.

En sortie du registre $140_1$, un automate de calcul d'anticipation $150_1$ reçoit en entrée les trois signaux $Q_o$, $Q_1$ et $Q_2$ de sortie des registres $140_o$, $140_1$, $140_2$ de rang respectivement 0, 1, 2, il est commandé par les signaux SM, SP et T.

Dans les automates $150_o$, $150_1$,..., l'anticipation est réalisée par la succession d'opérations de dilatation suivie d'opérations d'érosion.

L'automate de calcul d'anticipation 150 est décrit en détail sur la figure 19, il comporte un multiplexeur 207 comportant une sortie et deux entrées commandé par le signal T.

L'une de ses entrées est reliée à un opérateur de dilatation 208 qui fournit un signal $A_1$ et l'autre à un opérateur d'érosion 209 qui fournit un signal $B_1$.

L'opérateur de dilatation 208 comporte un circuit OU 201 à trois entrées et une sortie. Sa sortie est reliée au multiplexeur 207.

Sa première entrée est alimentée par le signal $Q_1$, sa deuxième entrée est alimentée par la sortie d'un circuit ET 202 à deux entrées dont l'une des entrées est le signal $Q_o$ et l'autre entrée est le signal SP. La troisième entrée du circuit OU 201 est alimentée par la sortie d'un circuit ET 203 à deux entrées, l'une de ces entrées étant le signal $Q_2$ et l'autre étant le signal SM.

La fonction réalisée par l'opération de dilatation 208 est ainsi

$$A_1 = Q_1 + Q_o \times SP + Q_2 \times SM$$

L'opérateur d'érosion 209 comporte un circuit ET 204 à trois entrées et une sortie. Sa sortie est reliée au multiplexeur 207.

Sa première entrée est alimentée par le signal $Q_1$.

Sa deuxième entrée est reliée à un circuit NON-ET à quatre entrées et une sortie 205.

La première entrée de ce circuit NON-ET 205 est reliée au signal SP, la deuxième au signal $Q_1$. La troisième entrée est reliée au signal $Q_o$ et la quatrième inversée au signal $Q_2$.

Un deuxième opérateur NON-ET 206 a quatre entrées et une sortie reliée à la troisième entrée du circuit ET 204, la première de ses entrées étant alimentée par le signal $Q_1$, la deuxième par le signal SM, la troisième par le signal $Q_2$ et la quatrième inversée par le signal $Q_o$.

La fonction réalisée par l'opérateur d'érosion 209 est ainsi

$$B_1 = Q_1 \times (SM \times Q_2 \times \overline{Q_0}) \times (SP \times \overline{Q_2} \times Q_0)$$

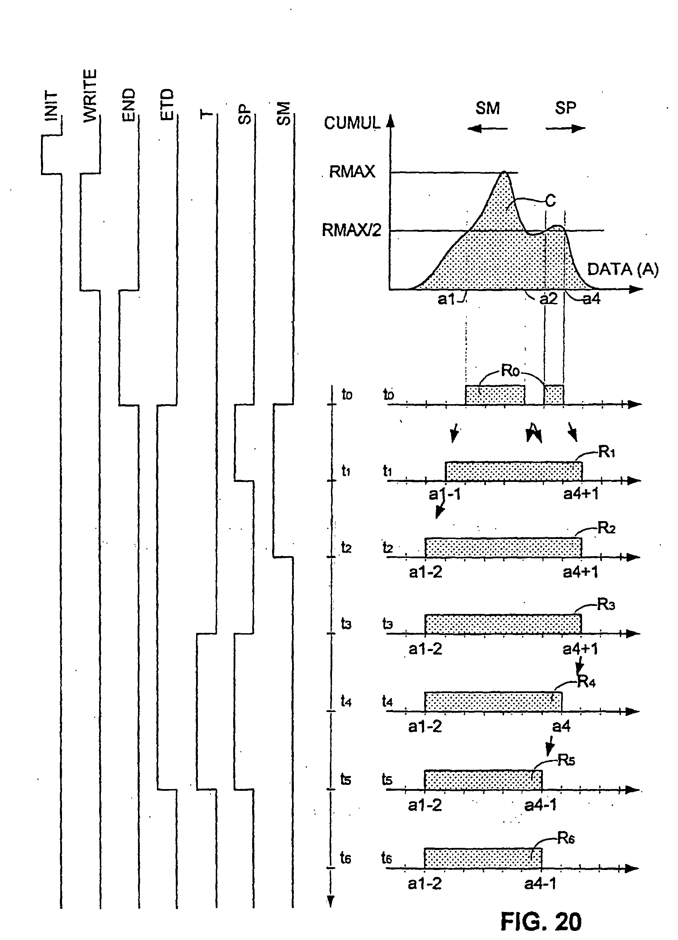

Le fonctionnement de l'opérateur d'anticipation est illustré par la figure 20.

Sur cette figure, à gauche en référence à l'axe des temps t, sont représentés les signaux INIT, WRITE, END, ETD, T, SP, SM.

Le signal INIT généré par le séquenceur 9 démarre le cycle de traitement d'une trame. Pendant sa durée, tous les mémoires et registres sont initialisés.

Le signal WRITE également généré par le séquenceur 9 suit le signal INIT et commande les calculs statistiques pour la trame considérée dont les données sont représentées par la courbe C, dont les axes représentent en abscisse les valeurs du paramètre et en ordonnée le nombre d'occurrences.

L'unité de test 103 recherche le nombre d'occurrences maximum RMAX.

A la fin du signal WRITE, le signal END encore généré par le séquenceur 9 valide la mise à jour de la mémoire du classifieur 118. Les nouvelles données sont générées par le comparateur 119.

A la fin du signal END au temps $t_o$, le contenu de la mémoire 118 est représenté par la répartition $R_o$.

La fin du signal END démarre le signal ETD dont la durée est déterminée par le générateur de commande 313. Ce signal ETD valide le calcul de l'étendue dans la mémoire 118 du classifieur.

Les signaux SP (Sens Plus) et SM (Sens Moins) compris dans ETD commandent respectivement le traitement dans le sens positif (SP=1) et dans le sens négatif (SM=1) de l'étendue de la répartition $R_o$ qui devient $R_1$ à $t_1$, $R_2$ à $t_2$ et $R_3$ à $t_3$...

Ainsi, les durées respectives de SP et SM déterminent l'étendue et la position de la répartition $R_5$ à la fin du signal ETD.

Le multiplexeur 207 commandé par la commande T ayant deux entrées alimentées respectivement par les sorties des opérateurs de dilatation et d'érosion et une sortie permet de mettre en oeuvre l'un ou l'autre de ces opérateurs en fonction de la commande T.

La sortie du multiplexeur 207 est $OUT_1$

$$OUT_1 = A_1 \text{ x } \bar{T} + B_1 \text{ x } T$$

**XI. La rétroannotation**

Dans un mode de réalisation simplifié décrit jusqu'à présent, le bloc de rétroannotation 102 comporte un seul registre contenant une seule valeur de rétroannotation constituant le critère R de rétroannotation.

**A. Critères complexes de rétroannotation**

Dans un mode de réalisation préféré, le bloc de rétroannotation est une mémoire pouvant contenir plusieurs valeurs formant ensemble le critère R de rétroannotation, l'une ou l'autre d'entre elles pouvant valider l'information portée par un pixel. Chacune de ces valeurs est mise en mémoire dans un registre terme produit 410.

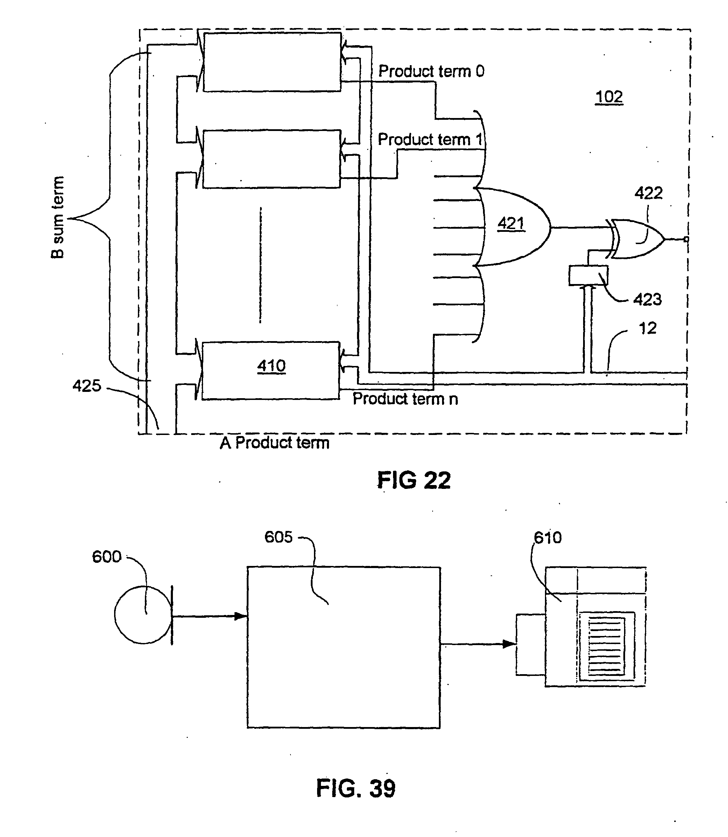

La figure 22 représente un tel bloc de rétroannotation 102 dans son ensemble. Il est composé d'un ensemble de termes produits 410 alimentés par le bus 425 A « PRODUCT TERM » et commandés par le bus Program Register 12.

Chacun de ces termes produits 410 a une sortie qui alimente un opérateur OU 421 qui fournit lui-même en sortie un signal entrant sur l'une des entrées d'un inverseur commandé 422, qui reçoit sur sa deuxième entrée les signaux provenant du bus Program Register 12 par l'intermédiaire du registre 423.

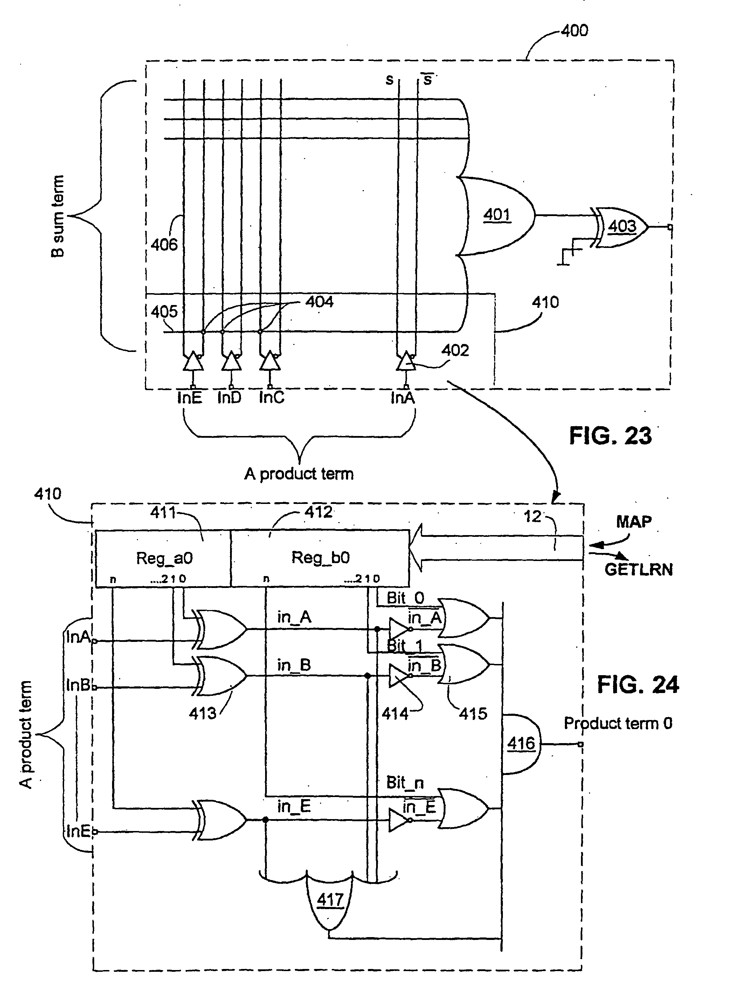

Les figures 23 et 24 illustrent une unité mémoire (FPGA - Field Programmable Gate Area) reprogrammable 400 mise en oeuvre pour la réalisation de l'unité de rétroannotation 102.

Une telle mémoire comporte un inverseur commandé 403 dont la sortie est la sortie de l'unité reprogrammable 400 et dont l'une des entrées est un opérateur OU 401 relié aux B lignes 405, ces lignes coupant les A colonnes 406 qui sont reliées à des amplificateurs 402 fournissant des signaux s et s.

Les intersections 404 des lignes 405 et des colonnes 406 sont des connexions programmables permettant de déterminer l'ensemble du fonctionnement de l'unité reprogrammable 400.

La figure 24 représente une ligne unique 410 d'une telle unité reprogrammable 400.

Une telle ligne comporte des registres 411 et 412 destinés à recevoir des variables Reg-a0 et Reg-b0 de programmation.

Cette ligne est décomposable en A fonctions élémentaires dont chacune comporte un inverseur commandé 413, un opérateur OU 415 et un inverseur 414. L'une des entrées de l'inverseur commandé 413 est reliée à l'entrée A et l'autre de ces entrées au bit i du registre Reg-a0.

La sortie de cet inverseur commandé 413 est reliée à l'entrée de l'inverseur 414 qui alimente, par sa sortie, l'une des entrées de l'opérateur OU 415.

L'autre entrée de cet opérateur OU 415 est alimentée par le bit i du registre Reg-b0.

La sortie de l'inverseur commandé 413 alimente également l'une des entrées d'un opérateur OU 417 qui reçoit encore l'ensemble des signaux correspondants produits par les différentes sorties des fonctions élémentaires.

Un opérateur ET 416 dont la sortie est product term0 reçoit en entrée d'une part la sortie de l'opérateur OU 417 et d'autre part les sorties des différentes fonctions élémentaires.

**B. L'apprentissage**

Le bloc de rétroannotation peut être programmé de l'extérieur par une instruction d'une interface de gestion d'application. Cette interface charge les registres 411 et 412.

Dans un mode de réalisation encore préféré, l'unité 1 de constitution d'histogramme, en plus de la mise à jour du classifieur et de l'anticipation a une fonction d'apprentissage.

A cet effet, l'unité 1 de constitution d'histogramme comporte un multiplexeur d'apprentissage 108 qui permet la programmation automatique de l'unité de rétroannotation 102.

Le multiplexeur d'apprentissage 109 sélectionne l'un ou l'autre des deux modes de fonctionnement possibles (exploitation et apprentissage). En mode d'exploitation, les valeurs contenues dans le registre de l'unité de rétroannotation 102 sont fixées, au contraire, en mode d'apprentissage, ces valeurs sont mises à jour.

Le mode d'exploitation

Lors du fonctionnement en mode d'exploitation, le multiplexeur d'apprentissage 109 émet, sur sa sortie, un signal de valeur 1 signifiant que les valeurs contenues dans les registres du bloc de rétroannotation 102 ne sont pas modifiées pendant la séquence de fonctionnement en mode d'exploitation.

Les valeurs stockées dans ces registres ont donc soit été choisies et mises en mémoire par l'utilisateur, soit ont résulté d'une phase d'apprentissage préalable que nous analyserons plus loin.

L'unité de rétroannotation 102 reçoit également, des autres unités de calcul d'histogramme coopérant avec celle décrite ici, des signaux comparables inE... inA.

Remplissant son rôle déjà décrit plus haut, cette unité de rétroannotation compare les valeurs ainsi reçues aux valeurs mises en mémoire dans son ou dans ses registre(s) et produit en sortie un signal 102s égal à 1 en cas de coïncidence et à zéro dans le cas contraire. Ce signal de validation est adressé à l'unité de validation d'incrémentation et lorsque sa valeur est égale à 1, autorise la prise en compte de la valeur du paramètre DATA(A) du pixel concerné dans la mémoire d'analyse 100 et, dans le cas contraire, autorise le traitement du pixel suivant.

Le mode d'apprentissage

Le fonctionnement de l'unité de calcul d'histogramme est alors commandé par des signaux représentés sur la figure 5, c'est-à-dire un signal d'initialisation (INIT), un signal d'écriture (WRITE), qui portent les informations correspondant à chaque pixel de la trame (ou de l'image) et un signal de fin END.

Dans le mode d'apprentissage, le multiplexeur d'apprentissage 109 fournit en sortie la valeur du signal de rétroannotation qui est alors utilisée comme donnée DATA(A).

Lors de l'apprentissage d'une unité de calcul d'histogramme de rang i, un signal LEARN$_i$ valide durant toute une séquence trame le traitement en mode apprentissage.

Pendant cette séquence, les registres d'apprentissage 116 sont mis à jour. Simultanément, le bloc de rétroannotation 102 assure la transparence des signaux, validant la donnée DATA(A), alors égale au signal de rétroannotation 111 dès qu'une au moins des entrées inA,..., in E est active (=1).

A la fin du signal WRITE, la mémoire d'histogramme 100 représente la distribution du signal de rétroannotation.

L'unité de test 103 produit alors un classement des occurrences par valeur décroissante en nombre égal au B « SUM TERM ».

Pendant le signal END, les valeurs du signal de rétroannotation ainsi sélectionnées sont écrites dans les registres 411 et 412 de chacun des blocs 410 du bloc de rétroannotation 102.

Le registre 412 correspond à la valeur du signal de rétroannotation et le registre 411 correspond à son complément. En pratique, on peut utiliser deux sorties d'un même registre fournissant ces deux valeurs.

On réalise ainsi une élaboration statistique automatique des paramètres caractéristiques dans la trame étudiée.

Ainsi, l'apprentissage nécessite, pour n paramètres d'entrée, n+1 unités calcul d'histogramme. Les n blocs traitant l'un des paramètres et le bloc restant traitant l'information de rétroannotation pour assurer l'apprentissage. En pratique, l'information de rétroannotation ayant un nombre de digits important, l'unité d'apprentissage est dédiée et est de grande dimension.

Les organigrammes des différents logiciels requis pour assurer les fonctions d'autoadaptation, d'anticipation et d'apprentissage représentés sur les figures sont lisibles en eux-mêmes et ne nécessitent pas d'explications complémentaires pour être compris de l'homme du métier. Lorsque, de manière interne, ils font appel à des variables, celles-ci ont été représentées dans un cadre. Certaines fonctions étant réalisées dans un composant particulier décrit par ailleurs, la référence numérique de ce composant a aussi été affectée à la fonction.

### XII. L'unité de traitement spatial et temporel

Avantageusement, l'unité de traitement spatial 6 produit en sortie des signaux F, SR, V, VL, DI, CO associés chacun à chaque pixel de manière synchrone. Ce sont de préférence des signaux numériques. Le signal complexe F comprend alors un certain nombre de signaux de sortie générés par le système comprenant de préférence des signaux signifiant la présence et la localisation d'une zone ou d'un objet en mouvement, la vitesse V est la direction orientée du déplacement DI de chaque pixel de l' image. Egalement, de préférence, une sortie du système est constituée par le signal vidéo numérique d'entrée qui est retardé (SR) de façon à le synchroniser avec la sortie ZH de la trame, en prenant en compte le temps de calcul du signal de données composite F (pour une trame). Le signal retardé SR est utilisé pour représenter l'image reçue par la caméra sur un moniteur ou un écran de télévision qui peut aussi être utilisé pour représenter l'information contenue dans le signal composite ZH. Le signal composite ZH peut aussi être transmis à une unité de traitement distincte 10a qui poursuit le traitement de ce signal.

### XIII. Traitement spatial : Choix d'axes

La position d'un pixel dans l'espace est représentée par rapport à un système d'axes. Selon la forme, l'orientation,... des objets dans la scène, certains systèmes d'axes fournissent de meilleurs résultats que les autres.

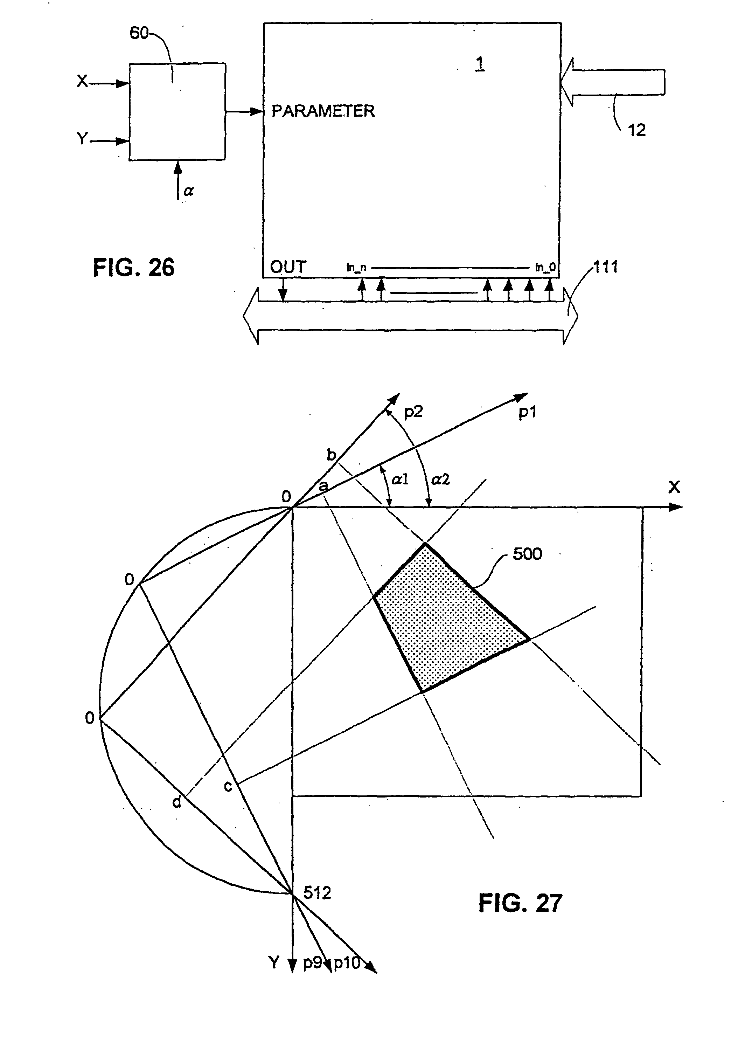

Les figures 26 et 27 présentent le procédé de choix des axes permettant d'obtenir des histogrammes optimisés, c'est-à-dire présentant un maximum particulièrement marqué.

L'unité Space transform reçoit en entrée les données spatiales x, y qui peuvent être soit des données cartésiennes, soit des données polaires. Cette unité Space transform est commandée par un signal $\alpha$ et fournit en sortie, pour chacune des valeurs de $\alpha$, un paramètre qui alimente une unité de constitution d'histogramme selon l'invention.

Le programme de commande de cette unité d'histogramme introduit par le Program Register permet de sélectionner la valeur $\alpha$ produisant un histogramme optimisé.

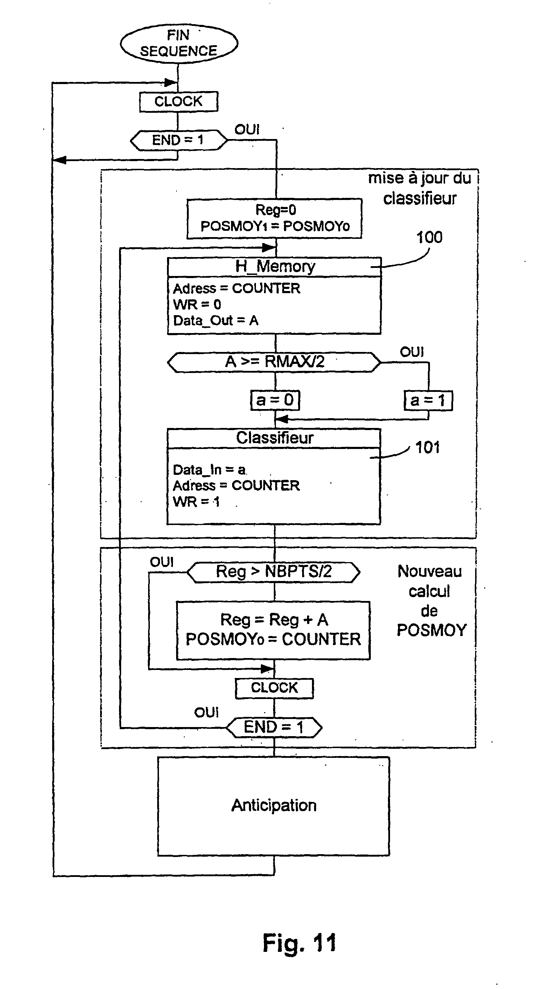

Un tel procédé de choix des axes a été décrit en détail dans la demande PCT WO-98/05002 (voir la figure 11 et la description correspondante, l'unité « Space Transform » y étant référencée 37).

### XIV. Traitement temporel

Au traitement colorimétrique qui exploite les valeurs des signaux de teinte, de saturation et de luminance, aux signaux de vitesse, direction et intensité, on peut adjoindre une fonction de filtrage spatial produisant un paramètre de résolution spatiale (méthode de Gabor) et une fonction binoculaire qui, par un automate de calcul de distance, fournit un paramètre de profondeur.

Des applications complètes peuvent être réalisées en exploitant tout ou partie de l'ensemble de ces paramètres.

### XV. Visu courbe statistique

Dans un mode de réalisation préféré, un générateur de courbe 114 permet l'incrustation à l'écran d'une courbe des valeurs DATA pour la trame antérieurement traitée.

De même, une incrustation du signal de rétroannotation est possible.

Ces incrustations sont adressées respectivement par les lignes 14 et 15 vers un écran. Des interrupteurs 16 et 17 permettent de sélectionner une unité de calcul d'histogramme particulière parmi l'ensemble de celles-ci.

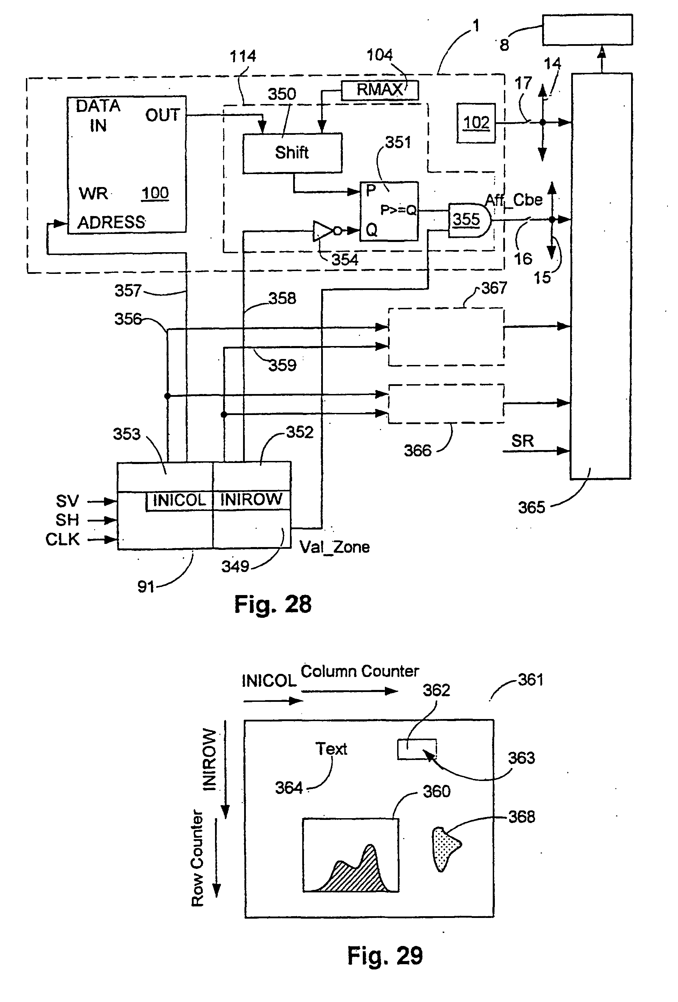

Les figures 28 et 29 décrivent plus précisément les moyens de visualisation de la courbe d'histogramme.

La mémoire 100 adressée par la valeur du compteur de colonnes 353 alimente l'une des entrées d'un registre à décalage 350 dont l'autre entrée est alimentée par le paramètre RMAX produit par le registre d'analyse 104.

La sortie de ce registre à décalage 350 alimente l'une des entrées d'un comparateur 351 dont l'autre entrée est alimentée par un compteur de lignes 352 au travers d'un inverseur 354. Un opérateur ET 355 recevant, d'une part, le résultat de la comparaison P≥Q et, d'autre part, la variable Val_Zone, fournit en sortie la variable Aff_Cbe.

Le compteur de colonnes 353 qui génère les variables « Col-Counter » 356 et « Col_Curve_Counter » 357, le compteur de lignes 352 qui génère les variables « Row_Curve_Counter » 358 et « Row_Counter » 359 et le générateur de la variable Val_Zone sont un sous-ensemble 91 du séquenceur 9.

De plus, le bloc de commande de visualisation 365 de l'écran 8 reçoit le signal vidéo retardé SR, une commande de curseur produite par le bloc curseur 366, une commande produite par la mémoire semi-graphique 367.

La figure 29 est le résultat de la vignette obtenue 360 validé par le commutateur 16 qui transfert le signal d'affichage courbe sur la commande d'incrustation 15 dans l'écran 361 qui comporte de plus une zone de commande 362, un curseur 363 et une zone texte 364.

Ainsi, cet écran et la souris associée constituent une Interface graphique utilisateur (GUI) permettant à l'utilisateur de générer et de commander l'application.

De même, la fonction de rétroannotation peut être visualisée, en dynamique, sous forme de pixels 368, par commutation du commutateur 17 sur la commande d'incrustation de la rétroannotation 14.

## XVI. Applications

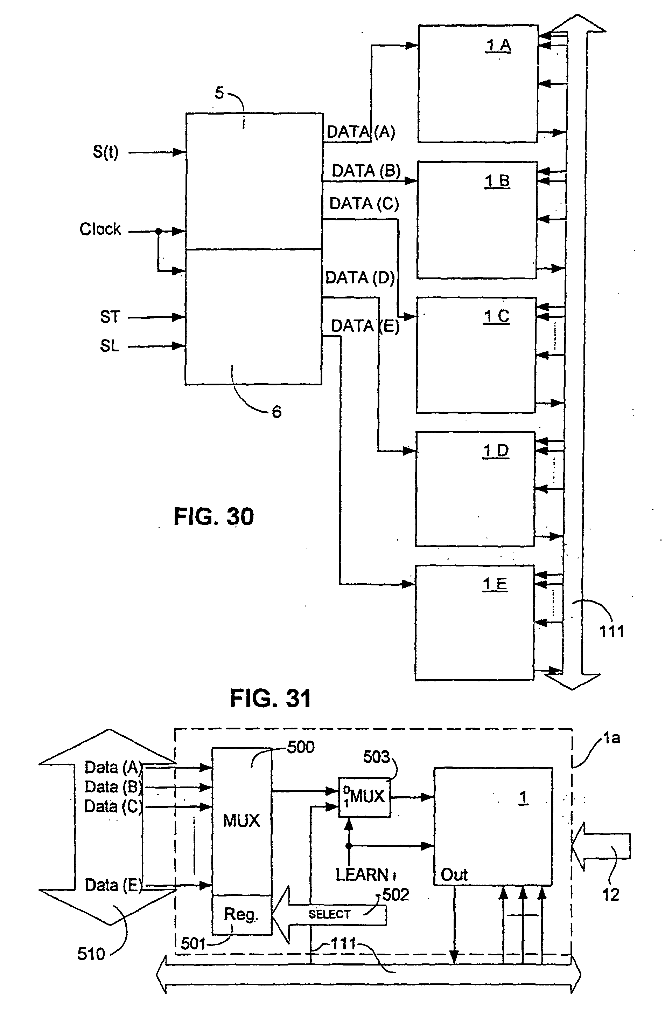

Sur les figures 30 et suivantes, on a représenté la mise en oeuvre d'un ensemble d'unités de calcul d'histogramme permettant la gestion d'un nombre aussi grand que nécessaire de paramètres A, B, C, D, E... L'association de paramètres à la fois spatiaux (en principe au nombre de deux) et temporels (au moins un) permet de modéliser un neurone spatio-temporel. Les unités de traitement respectivement temporelles 5 et spatiales 6 reçoivent d'une part la signal S(t), d'autre part les signaux horloge CLOCK et de synchronisation ST, synchronisation de trames et SL, synchronisation de lignes.

Tel que représenté sur les figures 4 et 30, chacun des paramètres A, B, C, D, E... sortant de ces unités de traitement temporel 5 et spatial 6 alimente une unité de calcul d'histogramme, respectivement $1_A$, $1_B$... $1_E$. La rétroannotation produite par l'ensemble des classifieurs est disponible sur le bus 111 et utilisée dans son ensemble par chacune des unités de calcul d'histogramme, respectivement $1_A$, $1_B$... $1_E$.

A titre d'exemple, A, B, C,..., E peuvent représenter respectivement les composantes couleur du pixel d'entrée sous la forme luminance L, teinte T et saturation S. D et E seraient les coordonnées $P_1$ et $P_2$ du pixel considéré dans un système d'axes optimisé.

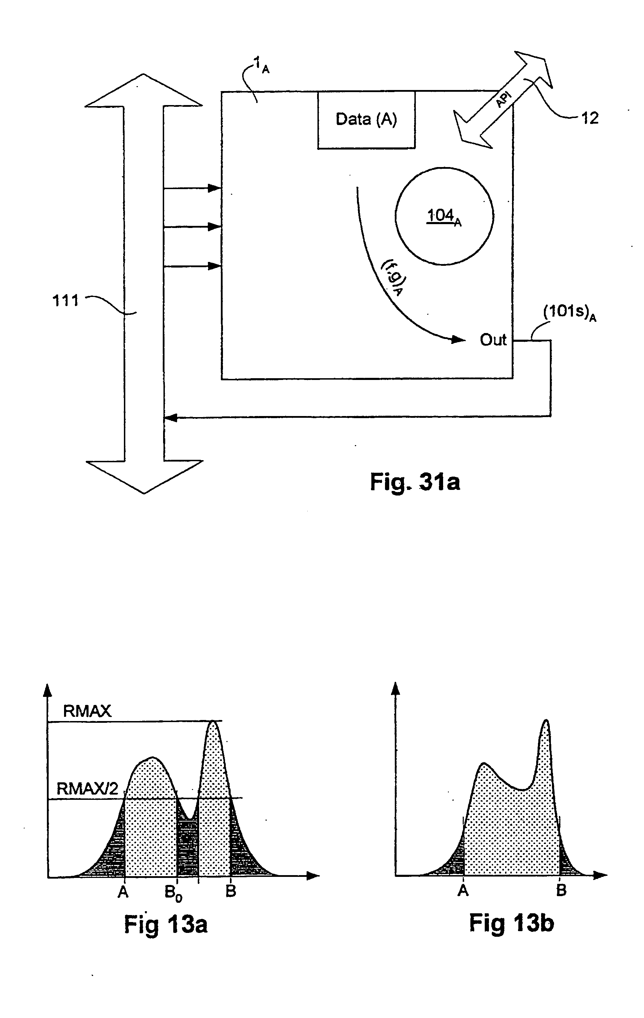

De manière synthétique, tel que représenté sur la figure 31 a, pour le paramètre A, chaque unité de calcul d'histogramme $1_A$, $1_B$, $1_E$ traite l'une des données DATA(A), DATA(B),...DATA(E) par la fonction correspondante $(fog)_A$... pour produire individuellement une valeur de sortie $(101s)_A$... et toutes ensemble la rétroannotation disponible sur le bus 111. En même temps, le registre de sortie d'analyse $104_A$ est alimenté.

Le choix du paramètre traité par chaque unité de calcul d'histogramme, le contenu du registre de sortie d'analyse 104 ainsi que la fonction fog qu'elle remplit, sont déterminés par l'A.P.I.

Dans le mode de réalisation de la figure 31, les différents paramètres DATA(A)... DATA(E) alimentent un multiplexeur d'entrée 500 qui est commandé par un registre 501. Le registre 501 est mis à jour par la commande SELECT référencée 502. Le multiplexeur commandé d'apprentissage 503 reçoit, selon l'état de la commande d'apprentissage de l'unité de calcul d'histogramme i, $LEARN_i$, soit l'information de rétroannotation transmise par le bus 111, soit les informations provenant du multiplexeur d'entrée 500.

Il est ainsi possible d'utiliser une seule unité de calcul d'histogramme 1 pour traiter l'un quelconque des différents paramètres A, B, C,..., E qui lui sont adressés par un bus 510 en fonction de la commande SELECT.

Selon l'état de la commande d'apprentissage LEARN, l'unité de calcul d'histogramme fonctionnera soit en exploitation, soit en apprentissage.

L'ensemble 1a ainsi formé par une unité de calcul d'histogramme 1, un multiplexeur d'entrée 500, son registre associé 501, et éventuellement un multiplexeur d'apprentissage constitue une unité de calcul d'histogramme polyvalente.

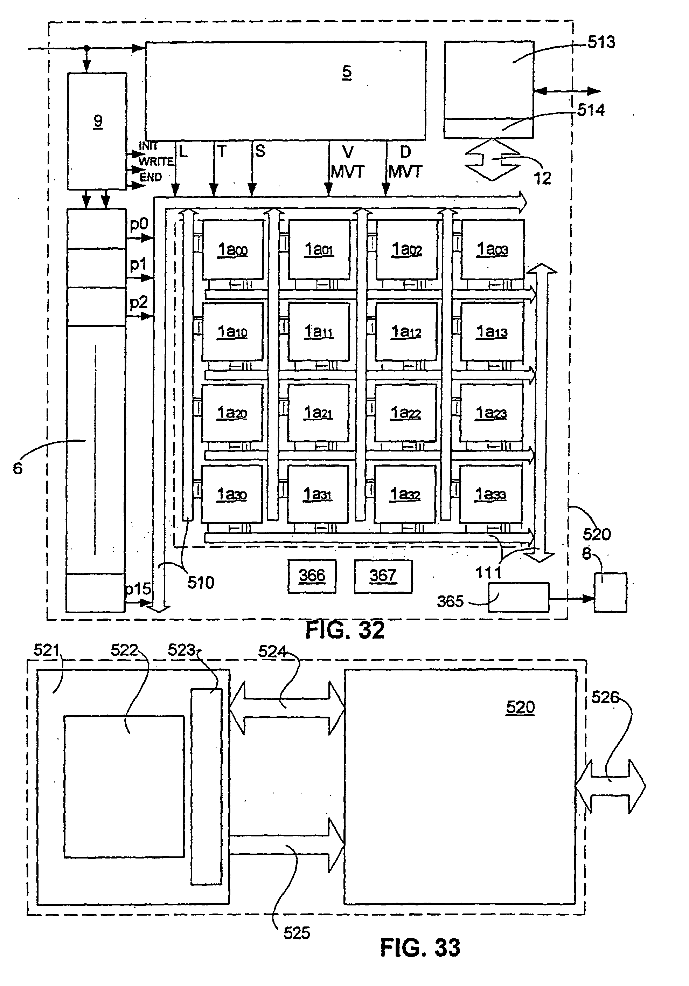

La figure 32 représente un dispositif complet comprenant à titre d'exemple un ensemble de seize unités de calcul d'histogramme polyvalentes.

Ces unités constituent une matrice, elles sont reliées à un bus 510 sur lequel les paramètres D, V, S, T, L, p0, p1, p2,..., p15 sont disponibles (p0, p1, p2,..., p15 sont des pentes d'axes de référence). Le bus 111 porte l'information de rétroannotation.

L'ensemble de l'application est commandé par l'unité de contrôle 513 qui détermine ceux des paramètres L, T, S, V, D, $p_o$, $p_1$... $p_{15}$ qui sont traités à un instant donné par une ou un groupe d'unités d'histogramme polyvalentes dédié et, par le séquenceur 9.

La figure 40 représente un diagramme fonctionnel d'un ensemble comportant plusieurs unités de calcul d'histogramme (tel que représenté sur la figure 31) conformément à un mode de réalisation de la présente invention. Chaque unité 1a de calcul d'histogramme est reliée à un bus de données 510 qui fournit les différents paramètres à traiter, et à un bus 11 qui fournit le signal de classification 101s et les signaux de fonction d'apprentissage aux différentes unités 1a. Chaque unité de calcul d'histogramme comporte une mémoire 100, un classifieur 101 et une unité de rétroannotation 102. Chaque unité 1a est susceptible d'avoir des fonctions de classification automatique d'anticipation et d'apprentissage telles que décrites plus haut.

L'ensemble d'unités de calcul d'histogramme 1 peut fonctionner en mode de traitement pendant qu'une ou plusieurs d'entre elles sont en mode d'apprentissage.

Dans un mode de réalisation particulier, une unité de calcul d'histogramme est utilisée en temps partagé par plusieurs paramètres pendant chaque trame, éventuellement mémorisés dans une mémoire non représentée.

Par exemple, en référence à la figure 31, l'unité de calcul d'histogramme 1 calcule des histogrammes et les statistiques correspondantes pour deux ou plus paramètres (par exemple DATA(A) et DATA(C)) pendant chaque trame.

Un multiplexeur 500 prévu dans ce mode de réalisation est susceptible de multiplexer les différents paramètres. De cette façon, un nombre limité d'unités de calcul d'histogramme est nécessaire pour traiter un plus grand nombre de paramètres, ce qui permet de diminuer la quantité de silicium nécessaire pour fabriquer le nombre utile d'unités de calcul d'histogramme.

Le processeur de perception visuelle générique (GVPP) 520 ainsi constitué peut être intégré sur un seul substrat semi-conducteur.

Le nombre d'unités de calcul d'histogramme polyvalentes 1a dépend de l'application et des technologies de fabrications de composants semiconducteurs disponibles.

La technologie 0,5 μm actuellement accessible permet l'intégration de 32 unités de façon économique. Avec les techniques avancées de semiconducteurs, il devient impossible de fabriquer de plus en plus d'unités de calcul d'histogramme (par exemple les blocs 1a de la figure 32) sur le même composant et de réaliser des calculs plus nombreux sur plus d'échantillons (c'est-à-dire des nombres de plus en plus importants d'échantillonnage par paramètre).

Une telle augmentation des capacités de calcul peut être réalisée sans augmentation de la complexité de l'API, qui est présentée plus loin et représentée en détail sur l'annexe A. Par exemple, le même ensemble d'instructions peut commander un ensemble de 20 unités comme un ensemble de 200 ou même de 2000 unités sans que sa complexité ne soit accrue.

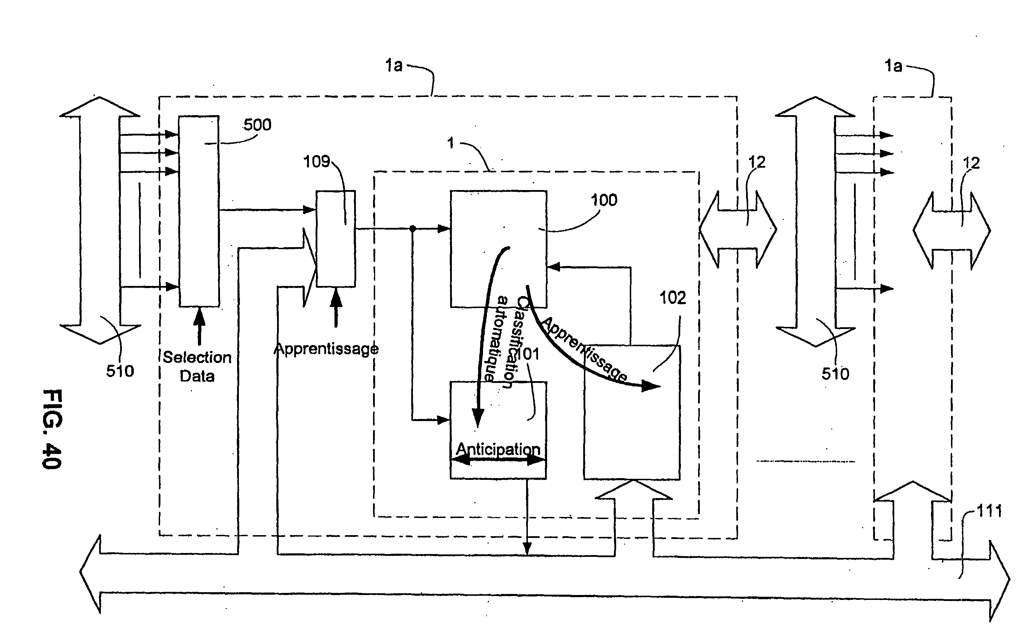

Dans un autre mode de réalisation représenté sur la figure 39, une unité de calcul 605 conforme à la présente invention, c'est-à-dire similaire à l'unité de calcul 520 de la figure 32, est utilisée pour traiter les paramètres associés à un domaine de perception autre que le domaine visuel. Sur la figure 39, la technique de la présente invention est appliquée à l'analyse orale ou de son, par exemple pour la reconnaissance vocale ou l'utilisation de la voix pour entrer un texte dans un ordinateur. Sur la figure 39, un dispositif générant un signal sonore fournit un signal sonore au calculateur 605 qui produit un signal de sortie.

Dans un mode de réalisation, le dispositif générant le signal comporte un microphone 600 mais peut aussi comprendre n'importe quel dispositif susceptible de fournir des signaux analogues ou digitaux, par exemple un lecteur CD ou DVD... Le dispositif générateur de signal fournit de préférence des signaux digitaux et peut fonctionner dans un mode esclave ou dans un mode maître de la même manière que l'ensemble générateur de signal 2 de la figure 1. Le calculateur 605 reçoit les signaux et traite différents paramètres du signal sonore. Ces paramètres comportent la fréquence, l'amplitude et la phase. Les paramètres de phase et d'amplitude sont respectivement analogues aux signaux spatiaux et temporels exploités pour le traitement de scènes visuelles. Le calculateur 605 fournit des signaux au dispositif 610 de façon à permettre la représentation des résultats. Par exemple, dans un mode de réalisation, le dispositif 610 comporte une imprimante permettant l'impression de textes associés aux signaux fournis par le générateur de signal 600. De la même manière, le dispositif 610 peut comporter un moniteur ou n'importe quel autre dispositif générateur de texte.

La figure 33 est la représentation d'un processeur de perception visuelle générique 520 ou 530 recevant des informations d'un imageur CMOS 521 comportant une rétine 522 et un séquenceur 523.

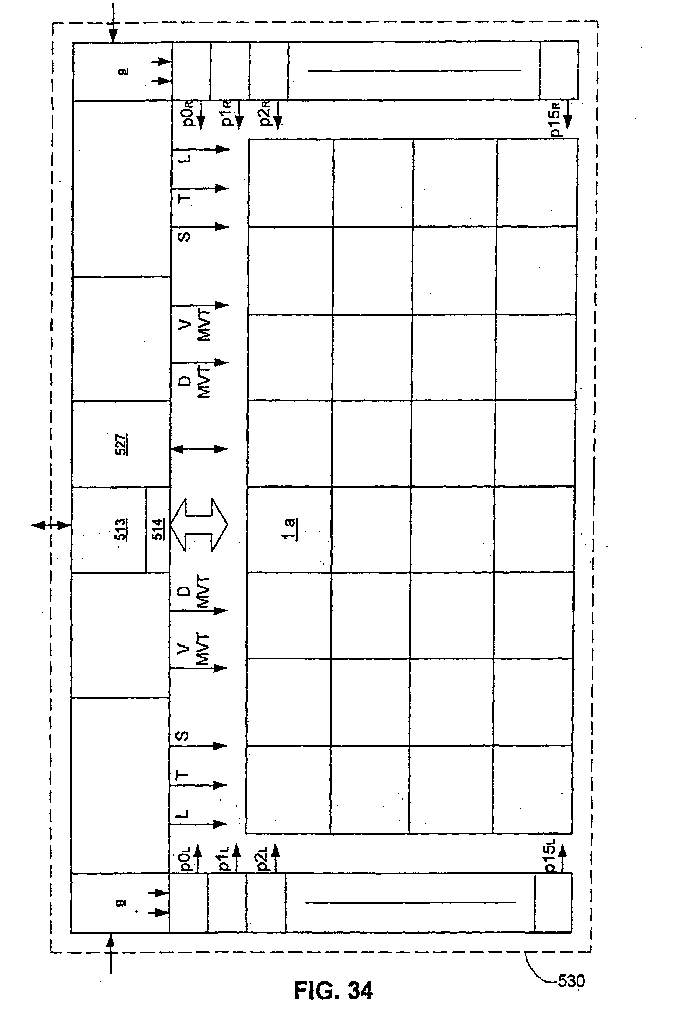

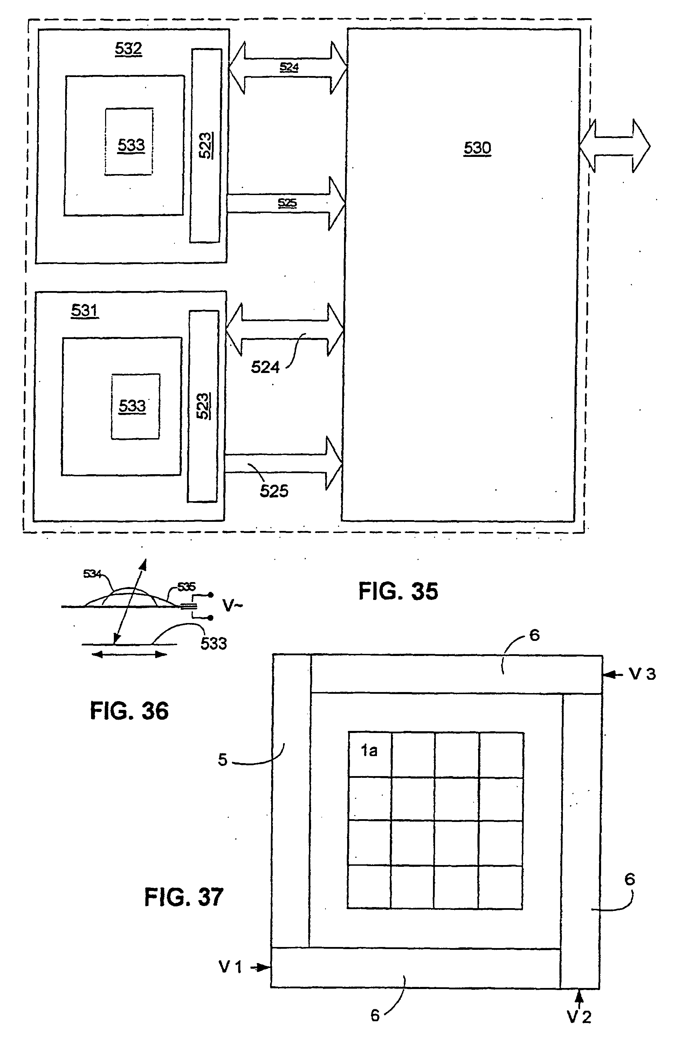

La figure 34 représente un système complet susceptible de constituer une application complète et fonctionnant avec plusieurs imageurs CMOS. L'association de deux imageurs CMOS 531, 532 représentés sur la figure 35 permettant d'acquérir des informations sur la profondeur dans la scène observée.

Dans certaines utilisations, il est souhaitable de pouvoir observer certains plans, en profondeur, d'une scène et c'est la raison pour laquelle la rétine peut être équipée d'un dispositif à focale variable tel que représenté sur la figure 36.

La figure 37 schématise un système constitué d'un ensemble d'unités de calcul d'histogramme polyvalente susceptible de traiter des informations provenant de trois directions, respectivement V1, V2 et V3 pouvant représenter un espace tridimensionnel. On peut ainsi gérer des données de perception volumique et les utiliser dans le domaine de la robotique.

**XVII. Interface de gestion de l'application (A.P.I.)**

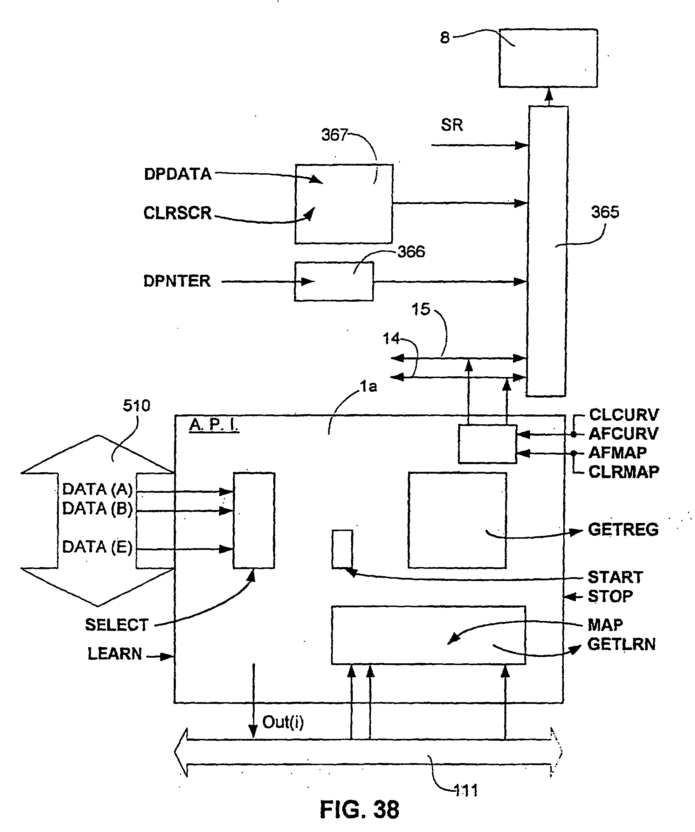

L'interface de gestion de l'application (A.P.I. - Application Program Interface) représentée sur la figure 38 permet de fournir à système complet ou processeur de perception visuelle générique composé d'un certain nombre de d'unités de calcul d'histogramme polyvalentes, l'ensemble des paramètres extérieurs dont il a besoin. On assure ainsi sa configuration dynamique. L'annexe A qui est jointe, fait partie intégrante de la description de la présente demande, elle fournit un diagramme fonctionnel de l'unité spatio-temporelle API, l'interface graphique utilisatrice (GUI) API, la souris API et le I/O API, ainsi que les différentes commandes API associées.

Chacun des mnémoniques de commande est associé à un indice i correspondant au numéro de l'unité de calcul d'histogramme polyvalente à laquelle il est destiné. Il peut être accompagné de paramètres de configuration.

Elle permet d'affecter les paramètres DATA(A)... DATA(E) à des paramètres réels de la scène observée.

SELECT permet d'attribuer un paramètre DATA(A) à une unité déterminée.

LEARN$_i$ permet d'effectuer l'apprentissage pour une d'unité de calcul d'histogramme polyvalente i.

START assure l'initialisation d'une unité de calcul d'histogramme polyvalente. Cette commande configure la mémoire 118 de classifieur 101.

STOP assure l'arrêt de l'unité de calcul d'histogramme polyvalente. Elle est utilisée dès qu'une unité de calcul d'histogramme est inactive. On réduit ainsi la consommation d'énergie de l'ensemble.

AFCURV est la commande d'affichage de courbe commandant le commutateur 16 représenté sur la figure 4. Sa commande inverse est CLCURV.

AFMAP est la commande d'affichage de la rétroannotation commandant le commutateur 17. Sa commande inverse est CLRMAP.

MAP est la commande d'écriture des registres 411 et 412 de l'unité de rétroannotation 102.

GETLRN est la commande assurant la récupération du contenu des registres de rétroannotation 411 et 412 après l'apprentissage.

**ANNEXE A**

**Spécifications API**

(Application Programming Interface)

interface de programmation applicative (API) pour le Processeur de Perception Visuelle Generique : (GVPP)

L'interface comporte 4 subdivisions pour GVPP :

- Une API Bloc spatio-temporel
- Une API graphique
- Une API de gestion de la souris
- Une API de gestion de la communication avec les périphériques

**Description des commandes de programmation applicatives**

API Bloc Spatio-temporel

Elle regroupe l'ensemble des fonctions génériques utilisées pour initialiser, paramétrer ou apprendre et démarrer le bloc ainsi que les fonctions pour récuperer les résultats de calcul. Le nom de la commande est suivi des parametres nécessaires écrit dans des registres définis.

Fonctions :

***START :***

Rôle : Démarrage du calcul d'un bloc.
Paramètres : Numéro du bloc concerné, valeur MIN, valeur MAX pour initialisation

Prototype :

```
Bloc3  equ    03
MIN    equ    10
MAX    equ    100

START Bloc3 MIN MAX
Entrée -     R0    :      numéro du bloc
             R1    :      valeur MIN
             R2    :      valeur MAX
Sortie  -
```

*STOP* :

Rôle :              Arret du calcul d'un bloc.
Paramètres :        Numéro du bloc concerné.
Prototype :

```
Bloc3 equ   03   :      equivalence Bloc3 est egal à la valeur 3

STOP Bloc3
Entrée -    R0   :      numéro du bloc
Sortie  -
```

*SELECT* :

Rôle :              Sélection du signal d'entrée d'un bloc. Par exemple la luminance, la teinte, la saturation, l'orientation de lignes dans le plan...etc.
Paramètres :        Numéro du bloc concerné, signal a seléctionner.
Prototype :

```
Bloc3  equ    03
LUM    equ    00

SELECT Bloc3 LUM

Entrée -     R0    :      Numéro du bloc
             R1    :      Parametre d'entrée
Sortie  -
```

*GET* :

Rôle                : Récupération des résultats de calcul.
Paramètres :        Numéro du bloc concemé, paramètre(s) a recupérer.

Prototype :

```
Bloc3      equ   03
MIN        equ   00
MAX        equ   01
RMAX       equ   02
POSRMX     equ   03
POSMOY     equ   04
NBPTS      equ   05

.........

GET Bloc3 NBPTS
Entrée -   R0   :   Numéro du bloc
           R1   :   Parametre d'entrée
Sortie -   R0   :   valeur résultante de ce parametre
```

**LEARN :**

Rôle :          Passage d'un bloc en mode apprentissage.
Paramètres :    Numéro du bloc concerné.
Prototype :

```
Bloc3      equ   03

LEARN Bloc3
Entrée -   R0   :   Numéro du bloc
Sortie -
```

**MAP :**

Rôle :          Programmation du bloc en fonction d'un apprentissage précédent pour changer de contexte. Recherche d'un autre évenement ou objet : ecriture de la matrice de rétro annotation du bloc.

Paramètres :    Numéro du bloc concemé, Combinaison logique des autres blocs associés ; somme de termes produits (ET et OU).

Prototype :

```
Bloc3      equ   03

MAP Bloc3 0F3 1AB 007
Entrée-    R0   :   Numéro du bloc
           R1   :   Premier terme produit
           R2   :   Second terme produit
           R3   :   ..........suite
Sortie-
```

***GETLRN*** :

Rôle :      Lecture des résultats de l'apprentissage .
Paramètres :    Numéro du bloc concerné.
Prototype :

```
GETLRN
Entrée -    R0  :    Numéro du bloc
Sortie  -   R0  :    MIN classification
            R1  :    MAX Classification
            R2  :    Premiere majeure association (terme produit)
            R3  :    Seconde association
            R4  :    ..........suite
```

***AFCURV*** :

Rôle :      Affichage de la courbe d'un bloc.
Paramètres :    Numéro du bloc concerné.
Prototype :

```
Bloc3         equ    03

AFCURV Bloc3
Entrée -     R0  :     Numéro du bloc
Sortie  -
```

***CLCURV*** :

Rôle :      Effacement de la courbe d'un bloc.
Paramètres :    Numéro du bloc concerné.
Prototype :

```
Bloc3          equ    03

CLCURV Bloc3
Entrée -     R0  :     Numéro du bloc
Sortie  -
```

***AFMAP*** :

Rôle :      Affichage de la table de rétro-annotation d'un bloc.
Paramètres :    Numéro du bloc concerné.

Prototype :

```
Bloc3          equ    03

AFMAP Bloc3
Entrée -      R0     :        Numéro du bloc
Sortie  -
```

*CLRMAP* :

Rôle :           Effacement de l'écran de la table de rétro-annotation d'un bloc.
Paramètres :     Numéro du bloc concerné.
Prototype :

```
Bloc3          equ    03

CLRMAP Bloc3
Entrée -      R0     :        Numéro du bloc
Sortie  -
```

API Graphique

*CLRSCR* :

Rôle :           Effacage de l'écran.
Paramètres :     Aucun.
Prototype :      CLRSCR
                 Entrée -
                 Sortie -

*DPDATA* :

Rôle :           Affichage des données à l'écran.
Paramètres :     Donnée à afficher et position à l'écran.
Prototype :

```
DPDATA
Entrée-       R0     :        Code ASCII
              R1     :        position ligne
              R2     :        position colonne
Sortie-
```

API de gestion de la souris

*DPNTER* :

Rôle :           Déplacer et afficher curseur.
Paramètres :     Coordonnées.

Prototype :

```
DPNTER
Entrée-      R0   :      position ligne
             R1   :      position colonne
Sortie-
```

***BUTTON* :**

Rôle :            Générer un click curseur.
Paramètres :      Bouttton.
Prototype :

```
BUTTON
Entrée-
Sortie-R0    :      nouvelle position des boutons
```

API de gestion de la communication avec les peripheriques

***MVCAM* :**

Rôle :            Déplacer la caméra.
Paramètres :      Position et focus.
Prototype :

```
MVCAM


Entrée -     R0   :      X position
             R1   :      Y position
             R2   :      Focus
Sortie  -
```

***GETCAM* :**

Rôle :            Récuperer la position de la caméra.
Paramètres :      Aucun.
Prototype :

```
GETCAM
Entrée-
Sortie-      R0   :      X position
             R1   :      Y position
             R2   :      Focus
```

***MVMOT* :**

Rôle :            Action moteur.
Parametre :       Sens+nombre de pas.

Prototype :

```
MVCAM
Entrée -     R0    :        Sens+nombre de pas
Sortie  -
```

**GETMOT** :

Rôle :           Recupere la position actuelle du moteur.
Parametre :   Non
Prototype :

```
GETMOT
Entrée -
Sortie  -    R0    :        position
```

**SENDPC** :

Rôle :               Envoyer une information au PC.
Paramètres :    pointer sur l'information et nombre d'informations.
Prototype :

```
SENDPC
Entrée-      R0    :        pointeur information
             R1    :        nombre d'informations
Sortie-
```

**GETPC** :

Rôle :               Récuperer une information du PC.
Paramètres :    Aucun.
Prototype :

```
GETPC
Entrée-
Sortie-R0    :        information
```

**Revendications**

1. Dispositif de perception automatique d'un événement intervenant dans un espace et en relation avec au moins un paramètre numérisé, **caractérisé en ce qu'**il comporte au moins deux unités de calcul d'histogramme pour le traitement dudit/desdits paramètres, une unité de contrôle (513), un bus de données (510), et un bus de rétroannotation (111) véhiculant au moins un signal de rétroannotation, l'unité de calcul d'histogramme étant destinée à calculer un histogramme représentatif du paramètre en fonction d'un signal de validation et à déterminer par classification un signal de classification résultant de la comparaison du paramètre et d'un critère C de sélection, le signal de classification étant envoyé sur le bus de rétroannotation, le signal de validation étant produit à partir de signaux de rétroannotation provenant du bus de rétroannotation (111) afin que le calcul de l'histogramme puisse dépendre des signaux de classification véhiculés par le bus de rétroannotation.

**2.** Dispositif de perception automatique selon la revendication 1, **caractérisé en ce qu'**il comporte, pour traiter plusieurs paramètres, plusieurs unités de calcul d'histogramme organisées en matrice, chaque unité de calcul étant connectée au bus de données et au bus de rétroannotation.

**3.** Dispositif de perception automatique selon l'une des revendications 1 et 2, **caractérisé en ce que** les unités de calcul d'histogramme traitent des données $a_{ijt}$ associées à des pixels formant ensemble un espace (i, j) multidimensionnel évoluant dans le temps et représenté à une succession de moments (T), lesdites données parvenant à ladite unité de calcul sous la forme d'un signal DATA(A) numérique sous forme d'une suite $a_{ijt}$ de nombre binaire de n bits associé à des signaux de synchronisation permettant de définir le moment donné (T) de l'espace et la position (i, j) du pixel dans cet espace, auquel le signal $a_{ijt}$ reçu à un instant donné (t) est associé, comprenant :

- une mémoire d'analyse (100) comportant une mémoire avec des adresses, chacune associée à des valeurs possibles des nombres de n bits du signal DATA(A) et dont l'écriture est contrôlée par un signal " WRITE ",
- un classifieur (101) comportant une mémoire destinée à recevoir un critère C de sélection du paramètre DATA (A), recevant le signal DATA(A) en entrée et fournissant, en sortie, un signal binaire de classification dont la valeur dépend du résultat de la comparaison du signal DATA(A) avec le critère (C) de sélection,
- une unité de rétroannotation (102) recevant le signal de sortie du classifieur et, de l'extérieur de l'unité de calcul de l'histogramme, des signaux binaires de classification individuels concernant des paramètres autres que DATA(A), ladite unité de rétroannotation fournissant en sortie un signal de validation global positif lorsque l'ensemble des signaux de rétroannotation individuels sont positifs,
- une unité de test (103),
- une unité de sortie d'analyse (104),
- un multiplexeur d'adresses (105),
- une unité de validation d'incrémentation (107),

le compteur de chaque adresse de la mémoire correspondant à la valeur (d) de $a_{ijt}$ à un instant donné, étant incrémentée d'une unité lorsque l'unité de rétroannotation fournit en sortie un signal de validation global positif, l'unité (103) de calcul et de mémorisation de données statistiques exploitant à la fin de la réception des données $a_{ijt}$ correspondant à l'espace à un moment (T) le contenu de la mémoire (100) pour mettre à jour l'unité de sortie d'analyse 104, la mémoire (100) étant effacée avant le début de chaque trame pour un espace à un moment (T) par un signal d'initialisation " INIT ", et qu'en outre :

- la mémoire du classifieur (101) est une mémoire adressable permettant la mise à jour en temps réel du critère de sélection (C) et ayant une entrée de données DATA IN, une commande d'adresse ADRESS et une commande d'écriture WR, recevant sur son entrée la sortie de la mémoire d'analyse et un signal END sur sa commande d'écriture,
- les unités de traitement d'histogramme comportent, de plus, un multiplexeur d'entrées de données (108) ayant deux entrées et une sortie, recevant sur l'une de ses entrées un signal de comptage COUNTER et, sur l'autre de ses entrées, la suite de données $a_{ijt}$ et fournissant en sortie la suite de données $a_{ijt}$ à la commande d'adresse de la mémoire du classifieur et un opérateur OU commandant le multiplexeur d'adresses (105) et recevant sur ses entrées un signal d'initialistion INIT et le signal de fin END.

**4.** Dispositif de perception automatique selon la revendication 3, **caractérisé en ce que** l'espace (i, j) est à deux dimensions et que le signal DATA(A) est associé aux pixels d'une succession d'images.

**5.** Dispositif de perception automatique selon l'une quelconque des revendications 3 et 4, **caractérisé en ce que** les unités de traitement d'histogramme comportent des moyens d'anticipation de la valeur du critère de sélection (C).

**6.** Dispositif de perception automatique selon la revendication 5, **caractérisé en ce que** les moyens d'anticipation de la valeur du critère de sélection (C) comportent des mémoires destinées à contenir les valeurs de paramètres statistiques relatives à deux trames successives ($T_0$ et $T_1$).

**7.** Dispositif de perception automatique selon la revendication 6, **caractérisé en ce que** les paramètres statistiques sont les valeurs moyennes des données $a_{ijt}$ validées.

8. Dispositif de perception automatique selon l'une quelconque des revendications 3 à 7, **caractérisé en ce que** le registre de sortie d'analyse (104) des unités de calcul d'histogramme constitue et garde en mémoire l'une au moins des valeurs suivantes : la valeur minimum " MIN ", la valeur maximum " MAX ", le nombre maximum de pixels pour lesquels le signal $V_{ijt}$ a une valeur particulière " RMAX ", la valeur particulière correspondante POSRMAX, le nombre total de pixels validés " NBPTS ".

9. Dispositif de perception automatique selon l'une quelconque des revendications 3 à 8, **caractérisé en ce que** le paramètre statistique de comparaison utilisé par le classifieur est RMAX/2.

10. Dispositif de perception automatique selon l'une quelconque des revendications 3 à 8, **caractérisé en ce qu'**il comporte un multiplexeur commandé, pouvant recevoir en entrée plusieurs paramètres statistiques et que la nature de la comparaison faite par le classifieur dépend de la commande de ce multiplexeur.

11. Dispositif de perception automatique selon l'une quelconque des revendications 3 à 10 **caractérisé en ce que** certaines unités de calcul d'histogramme, au moins, comportent un multiplexeur d'apprentissage destiné à recevoir un signal de commande extérieur et produisant un fonctionnement selon un mode d'apprentissage dans lequel les registres du classifieur et de l'unité de rétroannotation sont effacés au début de l'exploitation d'une trame et que le registre de sortie d'analyse fournit des valeurs caractéristiques de la séquence pour chacun de ces registres.

12. Dispositif de perception automatique selon l'une quelconque des revendications 3 à 11, **caractérisé en ce que** dans certaines unités de calcul d'histogramme, au moins, la mémoire du classifieur (101) est constituée d'un ensemble de registres (D) indépendants comportant chacun une entrée, une sortie et une commande d'écriture, le nombre de ces registres (D) étant égal au nombre n de bits des nombres de la suite $V_{ijt}$, et qu'elle comporte un décodeur permettant de sortir un signal de commande d'écriture correspondant à la valeur d'entrée (adresse) associée et un multiplexeur commandé par cette valeur d'entrée, permettant de lire le registre choisi.

13. Dispositif de perception automatique selon l'une quelconque des revendications 3 à 12, **caractérisé en ce que** certaines unités de calcul d'histogramme au moins, comportent des multiplexeurs, un d'entre eux étant associé à l'entrée de chaque registre et des modules combinatoires reliant entre eux les registres, lesdits multiplexeurs permettant le choix entre l'écriture séquentielle et une écriture commune à tous les registres liés entre eux par les modules combinatoires.

14. Dispositif de perception automatique selon l'une quelconque des revendications 3 à 13, **caractérisé en ce que** dans certaines unités de calcul d'histogramme au moins, les modules combinatoires comportent un opérateur morphologique de dilatation comportant une unité logique " OU " à trois entrées dont la première reçoit le signal de sortie du registre de rang " Q ", la deuxième est reliée à la sortie d'une unité logique " ET " à deux entrées recevant respectivement le signal de sortie du registre de rang " Q+1 " et un signal de dilatation positive, la troisième est reliée à la sortie d'une unité logique " ET " à deux entrées recevant respectivement le signal de sortie du registre de rang " Q-1 " et un signal de dilatation négative.

15. Dispositif de perception automatique selon l'une quelconque des revendications 3 à 13, **caractérisé en ce que** dans certaines unités de calcul d'histogramme au moins, les modules combinatoires comportent un opérateur morphologique d'érosion comportant une unité logique " ET " à trois entrées dont la première reçoit le signal de sortie du registre de rang " Q ", la deuxième est reliée à la sortie d'une unité logique " ET " dont une inversée à quatre entrées recevant respectivement le signal de sortie du registre de rang " Q ", le signal de sortie du registre de rang " Q-1 ", le signal de sortie du registre de rang " Q+1 " et un signal d'érosion positive, la troisième est reliée à la sortie d'une unité logique " ET " à quatre entrées dont une inversée recevant respectivement le signal de sortie du registre de rang " Q ", le signal de sortie du registre de rang " Q-1 ", le signal de sortie du registre de rang " Q+1 " et un signal d'érosion négative.

16. Dispositif de perception automatique selon l'une quelconque des revendications 14 et 15, **caractérisé en ce que** dans certaines unités de calcul d'histogramme au moins, chaque module combinatoire comporte un multiplexeur associant un opérateur morphologique de dilatation et un opérateur morphologique d'érosion.

17. Procédé de perception automatique d'un événement intervenant dans un espace et avec au moins un paramètre, consistant à le numériser, **caractérisé en ce qu'**on transmet sous contrôle d'une unité de contrôle (513) ledit paramètre par un bus de données (510) à au moins une unité de calcul d'histogramme, l'unité de calcul d'histogramme calculant un histogramme représentatif du paramètre en fonction d'un signal de validation et déterminant par classification un signal de classification résultant de la comparaison du paramètre et d'un critère C de sélection, **en ce qu'**on envoie sur un bus de rétroannotation (111) le signal de classification, et **en ce que** pour produire le signal de validation on utilise les signaux de rétroannotation provenant du bus de rétroannotation afin de faire dépendre le calcul de l'histogramme des signaux de classification véhiculés par le bus de rétroannotation.

18. Procédé selon la revendication 17, **caractérisé en ce que** l'événement est représenté par plusieurs paramètres et que le résultat provient de plusieurs unités de calcul d'histogramme organisées en matrice, chaque unité de calcul étant connectée au bus de données et au bus de rétroannotation.

19. Procédé d'analyse conforme à l'une des revendications 17 et 18 d'un paramètre représentatif d'un événement dans un dispositif électronique comprenant un calcul d'histogramme sur des données $a_{ijt}$ associées à des pixels formant ensemble un espace (i, j) multidimensionnel évoluant dans le temps et représenté à une succession de moments (T), lesdites données parvenant à ladite unité de calcul sous la forme d'un signal DATA(A) numérique sous forme d'une suite $a_{ijt}$ de nombre binaire de n bits associé à des signaux de synchronisation permettant de définir le moment donné (T) de l'espace et la position (i, j) du pixel dans cet espace auquel le signal $a_{ijt}$ reçu à un instant donné (t) est associé, dans lequel

 - on associe à chaque donnée $a_{ijt}$ un signal binaire de classification dont la valeur dépend du résultat de la comparaison du signal DATA(A) avec le critère (C) de sélection,
 - on constitue une répartition statistique des données $a_{ijt}$ pour un moment (T) donné pour lesquelles un signal de validation global est positif, ledit signal de validation global étant constitué d'un ensemble de signaux de rétroannotation individuels chacun correspondant à un paramètre DATA(A), DATA(B),... DATA(E), résultant de la comparaison entre un critère de rétroannotation R et de son signal de classification et étant positif.

20. Procédé d'analyse d'un paramètre selon la revendication 19, **caractérisé en ce que** l'espace (i, j) est à deux dimensions et que le signal DATA(A) est associé aux pixels d'une succession d'images.

21. Procédé d'analyse d'un paramètre selon l'une des revendications 19 et 20, **caractérisé en ce que** le critère de classification (C) est mis à jour, en temps réel, en fonction de la répartition statistique.

22. Procédé d'analyse d'un paramètre selon la revendication 21, **caractérisé en ce que** la mise à jour du critère de classification (C) dépend de l'évolution de la valeur moyenne du paramètre $a_{ijt}$ validé entre deux trames successives ($T_0$ et $T_1$).

23. Procédé d'analyse d'un paramètre selon l'une quelconque des revendications 20 à 22, **caractérisé en ce que** la mise à jour du critère de classification (C) est anticipée.

24. Procédé d'analyse d'un paramètre selon la revendication 23, **caractérisé en ce que** l'anticipation de la mise à jour du critère de classification (C) résulte d'applications successives d'un opérateur de dilatation et d'un opérateur d'érosion, chacun d'eux, un nombre de fois et dans un sens dépendant de l'évolution de la valeur moyenne du paramètre $a_{ijt}$ validé entre deux trames successives ($T_0$ et $T_1$).

25. Procédé d'analyse d'un paramètre selon l'une quelconque des revendications 19 à 24, **caractérisé en ce que** le critère de rétroannotation (R) est complexe.

26. Procédé d'analyse d'un paramètre selon l'une quelconque des revendications 19 à 25, **caractérisé en ce que** le critère de rétroannotation (R) est automatiquement proposé à la suite d'une étape d'apprentissage.

27. Unité de calcul d'histogramme telle que mise en oeuvre dans le dispositif de perception automatique selon l'une quelconque des revendications 1 à 16.

**Patentansprüche**

1. Vorrichtung zur automatischen Wahrnehmung eines in einem Raum und in Verbindung mit mindestens einem digitalen Parameter eintretenden Ereignisses, **dadurch gekennzeichnet, dass** sie mindestens zwei Histogrammberechnungseinheiten zur Verarbeitung des bzw. der besagten Parameter, eine Kontrolleinheit (513), einen Datenbus (510) und einen mindestens ein Back-Annotations-Signal transportierenden Back-Annotations-Bus (111) umfasst, wobei die Histogrammberechnungseinheit zur Berechnung eines diesen Parameter repräsentierenden Histogramms in Abhängigkeit von einem Freigabesignal und zur Bestimmung eines sich aus dem Vergleich zwischen dem Parameter und einem Auswahlkriterium C ergebenden Klassifizierungssignals durch Klassifizierung dient, wobei das Freigabesignal von vom Back-Annotations-Bus (111) kommenden Back-Annotations-Signalen ausgehend erzeugt wird, damit die Histogrammberechnung in Abhängigkeit von den vom Back-Annotations-Bus transportierten Klassifizierungssignalen erfolgen kann.

2. Vorrichtung zur automatischen Wahrnehmung nach Anspruch 1, **dadurch gekennzeichnet, dass** sie zur Verarbeitung mehrerer Parameter mehrere, als Matrix ausgebildete Histogrammberechnungseinheiten umfasst, wobei jede Berechnungseinheit an den Datenbus und an den Back-Annotations-Bus angeschlossen ist.

3. Vorrichtung zur automatischen Wahrnehmung nach einem der Ansprüche 1 und 2, **dadurch gekennzeichnet, dass** die Histogrammberechnungseinheiten Bildpunkten zugeordnete Daten $a_{ijt}$ verarbeiten, die zusammen einen multidimensionalen, zeitlich sich verändernden, in einer Folge von Zeitpunkten (T) dargestellten Raum (i, j) bilden, wobei die besagten Daten der besagten Berechnungseinheit als digitales, mit Synchronisationssignalen verbundenes DATA(A)-Signal in Form einer binären Folge $a_{ijt}$ von n Bit zugeführt werden, mit dem der betreffende Zeitpunkt (T) des Raums und die Position (i, j) des Bildpunktes in diesem Raum, dem das zu einem bestimmten Zeitpunkt (t) erhaltene Signal $a_{ijt}$ zugeordnet ist, bestimmt werden können, mit:

   - einem Analysespeicher (100), der einen Speicher mit Adressen umfasst, die jeweils möglichen Werten der Anzahlen von n Bit des DATA(A)-Signals zugeordnet sind und deren Schreiben durch ein "WRITE"-Signal gesteuert wird,
   - einem einen Speicher für das Auswahlkriterium C des DA-TA(A)-Parameters umfassenden Klassifizierer (101), der das DATA(A)-Signal am Eingang empfängt und am Ausgang ein binäres Klassifizierungssignal ausgibt, dessen Wert vom Ergebnis des Vergleiches zwischen dem DATA(A)-Signal und dem Auswahlkriterium C abhängt,
   - einer Back-Annotations-Einheit (102), die vom Klassifizierer das Ausgangssignal und von außerhalb der Histogrammberechnungseinheit einzelne binäre Klassifizierungssignale in Bezug auf andere Parameter als den DATA(A) bekommen, wobei die besagte Back-Annotations-Einheit am Ausgang ein positives Gesamtfreigabesignal abgibt, wenn alle einzelnen Back-Annotations-Signale positiv sind,
   - einer Testeinheit (103),
   - einer Analyseausgabeeinheit (104),
   - einem Adressen-Multiplexer (105),
   - einer Inkrementierungsfreigabe-Einheit (107),

   dass der Zähler jeder Adresse des Speichers einem Wert (d) von $a_{ijt}$ zu einem bestimmten Zeitpunkt entspricht, der um eine Einheit inkrementiert wird, wenn die Back-Annotations-Einheit am Ausgang ein positives Gesamtfreigabesignal ausgibt,
   wobei die Einheit (103) für die Berechnung und die Speicherung von statistischen Daten am Ende des Empfangs der dem Raum zu einem bestimmten Zeitpunkt (T) entsprechenden Daten $a_{ijt}$ den Inhalt des Speichers (100) zur Aktualisierung der Analysenausgabeeiheit (104) auswertet,
   dass der Speicher (100) vor Beginn jedes Rasters für einen Raum zu einem bestimmten Zeitpunkt (T) durch ein Initialisierungssignal "INIT" gelöscht wird,
   und außerdem dass:

   - der Speicher des Klassifizierers (101) ein adressierbarer Speicher ist, mit dem das Auswahlkriterium (C) in Echtzeit aktualisiert werden kann und der einen Dateneingang DATA IN, eine Adressensteuerung ADRESS und eine Schreibsteuerung WR umfasst, wobei er an seinem Eingang die Ausgabe des Analysespeichers und ein Signal END auf seiner Schreibsteuerung empfängt;
   - die Histogrammverarbeitungseinheiten zudem einen Dateneingänge-Multiplexer (108) mit zwei Eingängen und einem Ausgang umfassen, der an einem seiner Eingänge ein Zählsignal COUNTER und am anderen die Datenfolge aijt empfängt und am Ausgang die Datenfolge $a_{ijt}$ an die Adressensteuerung des Speichers des Klassifizierers und eine ODER-Verknüpfung an die Steuerung des Adressen-Multiplexers (105) liefert und an seinen Eingängen ein Initialisierungssignal INIT und das Endesignal END empfängt.

4. Vorrichtung zur automatischen Wahrnehmung nach Anspruch 3, **dadurch gekennzeichnet, dass** der Raum (i, j) zweidimensional ist und das DATA(A)-Signal den Bildpunkten einer Bildfolge zugeordnet ist.

**5.** Vorrichtung zur automatischen Wahrnehmung nach einem der Ansprüche 3 und 4, **dadurch gekennzeichnet, dass** die Histogrammverarbeitungseinheiten Mittel zur Vorausbestimmung des Wertes des Auswahlkriteriums (C) aufweisen.

**6.** Vorrichtung zur automatischen Wahrnehmung nach Anspruch 5, **dadurch gekennzeichnet, dass** die Mittel zur Vorausbestimmung des Wertes des Auswahlkriteriums (C) Speicher zur Aufnahme der statistischen Parameterwerte bezüglich von zwei aufeinander folgenden Rastern (To und T1) aufweisen.

**7.** Vorrichtung zur automatischen Wahrnehmung nach Anspruch 6, **dadurch gekennzeichnet, dass** die statistischen Parameter den Durchschnittswerten der freigegebenen Daten $a_{ijt}$ entsprechen.

**8.** Vorrichtung zur automatischen Wahrnehmung nach einem der Ansprüche 3 bis 7, **dadurch gekennzeichnet, dass** das Analyseausgaberegister (104) der Histogrammberechnungseinheiten mindestens einen der folgenden Werte bildet und speichert: den Mindestwert "MIN", den Höchstwert "MAX", die maximale Anzahl Bildpunkte, für die das Signal $V_{ijt}$ einen Sonderwert "RMAX" aufweist, den entsprechenden Sonderwert "POSRMAX", die Gesamtzahl freigegebener Bildpunkte "NBPTS".

**9.** Vorrichtung zur automatischen Wahrnehmung nach einem der Ansprüche 3 bis 8, **dadurch gekennzeichnet, dass** der vom Klassifizierer verwendete statistische Vergleichsparameter RMAX/2 ist.

**10.** Vorrichtung zur automatischen Wahrnehmung nach einem der Ansprüche 3 bis 8, **dadurch gekennzeichnet, dass** sie einen gesteuerten Multiplexer umfasst, der am Eingang mehrere statistische Parameter empfangen kann, und dass die Art des vom Multiplexer durchgeführten Vergleichs von der Steuerung dieses Multiplexers abhängt.

**11.** Vorrichtung zur automatischen Wahrnehmung nach einem der Ansprüche 3 bis 10, **dadurch gekennzeichnet, dass** mindestens einige Histogrammberechnungseinheiten einen Teach-in-Multiplexer aufweisen, der zum Empfang eines äußeren Steuersignals dient und eine einem Teach-in-Modus entsprechende Funktionsweise bewirkt, bei dem die Register des Klassifizierers und der Back-Annotations-Einheit zu Beginn der Auswertung eines Rahmens gelöscht werden, und dass das Analyseausgaberegister die Sequenz kennzeichnende Werte für jedes dieser Register liefert.

**12.** Vorrichtung zur automatischen Wahrnehmung nach einem der Ansprüche 3 bis 11, **dadurch gekennzeichnet, dass** bei mindestens einigen Histogrammberechnungseinheiten der Speicher des Klassifizierers (101) aus einem Satz von unabhängigen Registern (D) besteht, die jeweils einen Eingang, einen Ausgang und eine Schreibsteuerung aufweisen, wobei die Anzahl dieser Register (D) der Anzahl n Bit der Anzahlen der $V_{ijt}$ -Folge entspricht, und einen Decoder, mit dem ein dem zugeordneten Eingangswert (Adresse) entsprechendes Schreibsteuersignal ausgegeben werden kann, sowie einen von diesem Eingangswert gesteuerten Multiplexer zum Lesen des ausgewählten Registers aufweist.

**13.** Vorrichtung zur automatischen Wahrnehmung nach einem der Ansprüche 3 bis 12, **dadurch gekennzeichnet, dass** mindestens einige Histogrammberechnungseinheiten Multiplexer aufweisen, von denen einer dem Eingang jedes Registers zugeordnet ist und wobei Kombinationsmodule die Register miteinander verbinden, wobei es mit den besagten Multiplexern möglich ist, zwischen sequentiellem Schreiben und gemeinsamem Schreiben aller durch die Kombinationsmodule miteinander verbundenen Registern zu wählen.

**14.** Vorrichtung zur automatischen Wahrnehmung nach einem der Ansprüche 3 bis 13, **dadurch gekennzeichnet, dass** bei mindestens einigen Histogrammberechnungseinheiten die Kombinationsmodule einen morphologischen Dilatationsoperator mit einer logischen "ODER"-Einheit mit drei Eingängen aufweisen, von denen der erste das Ausgangssignal des Registers vom Rang "Q" empfängt, der zweite mit dem Ausgang einer logischen "UND"-Einheit mit zwei Eingängen verbunden ist, die jeweils das Ausgangssignal des Registers vom Rang "Q+1" und ein positives Dilatationssignal empfangen, und der dritte mit dem Ausgang einer logischen "UND"-Einheit mit zwei Eingängen verbunden ist, die jeweils das Ausgangssignal des Registers vom Rang "Q-1" und ein negatives Dilatationssignal empfangen.

**15.** Vorrichtung zur automatischen Wahrnehmung nach einem der Ansprüche 3 bis 13, **dadurch gekennzeichnet, dass** bei mindestens einigen Histogrammberechnungseinheiten die Kombinationsmodule einen morphologischen Erosionsoperator mit einer logischen "UND"-Einheit mit drei Eingängen aufweisen, von denen der erste das Ausgangssignal Registers vom Rang "Q" empfängt, der zweite mit dem Ausgang einer logischen "UND"-Einheit mit vier Eingängen, wovon einer invertiert ist, verbunden ist, die jeweils das Ausgangssignal des Registers vom Rang "Q", das Ausgangssignal des Registers vom Rang "Q-1", das Ausgangssignal des Registers vom Rang "Q+1" und ein positives Erosionssignal empfangen, der dritte mit dem Ausgang einer logischen "UND"-Einheit mit vier Eingängen, wovon einer invertiert ist, verbunden ist, die jeweils das Ausgangssignal des Registers vom Rang "Q", das Ausgangssignal des Registers vom Rang "Q-1", das Ausgangssignal des Registers vom Rang "Q+1" und ein negatives Erosionssignal empfangen.

16. Vorrichtung zur automatischen Wahrnehmung nach einem der Ansprüche 14 und 15, **dadurch gekennzeichnet, dass** bei mindestens einigen Histogrammberechnungseinheiten jedes Kombinationsmodul einen Multiplexer in Verbindung mit einem morphologischen Dilatationsoperator und einem morphologischen Erosionsoperator aufweist.

17. Verfahren zur automatischen Wahrnehmung eines in einem Raum und mit mindestens einem Parameter eintretenden Ereignisses zu dessen Digitalisierung, **dadurch gekennzeichnet, dass** der besagte Parameter unter der Kontrolle einer Kontrolleinheit (513) über einen Datenbus (510) an mindestens eine Histogrammberechnungseinheit übertragen wird, die ein den Parameter in Abhängigkeit eines Freigabesignals repräsentierendes Histogramm berechnet und durch Klassifizierung ein sich aus dem Vergleich des Parameters mit einem Auswahlkriterium C ergebendes Klassifizierungssignal bestimmen, dass das Klassifizierungssignal auf einem Back-Annotations-Bus übertragen wird und dass zur Erzeugung des Freigabesignals die vom Back-Annotations-Bus kommenden Back-Annotations-Signale verwendet werden, um die Histogrammberechnung von den vom Back-Annotations-Bus transportierten Klassifizierungssignalen abhängig zu machen.

18. Verfahren nach Anspruch 17, **dadurch gekennzeichnet, dass** das Ereignis durch mehrere Parameter dargestellt ist und dass das Ergebnis von mehreren, als Matrix ausgebildeten Histogrammberechnungseinheiten stammt, wobei jede Berechnungseinheit an den Datenbus und an den Back-Annotations-Bus angeschlossen ist.

19. Verfahren zur Analyse nach einem der Ansprüche 17 und 18 eines ein Ereignis einer elektronischen Vorrichtung darstellenden Parameters mit einer Histogrammberechnung von Daten $a_{ijt}$, die Bildpunkten zugeordnet sind und die zusammen einen multidimensionalen, zeitlich sich verändernden und bei einer Folge von Zeitpunkten (T) repräsentierten Raum (i, j) bilden, wobei die besagten Daten der besagten Berechnungseinheit als digitales, mit Synchronisationssignalen verbundenes DATA(A)-Signal in Form einer binären Folge $a_{ijt}$ von n Bit zugeführt werden, mit dem der bestimmte Zeitpunkt (T) des Raums und die Position (i, j) desjenigen Bildpunktes in diesem Raum, dem das zu einem bestimmten Zeitpunkt (t) erhaltene Signal zugeordnet ist, bestimmt werden, bei dem

- jedem der Daten $a_{ijt}$ ein binäres Klassifizierungssignal zugeordnet wird, dessen Wert von dem Ergebnis des Vergleichs des Signals DATA(A) mit dem Auswahlkriterium (C) abhängt,
- eine statistische Verteilung der Daten $a_{ijt}$ für einen bestimmten Zeitpunkt (T), für die ein Signal positiv ist, gebildet wird, wobei das Gesamtfreigabesignal aus einem Satz von einzelnen, jeweils einem Parameter DATA(A), DATA(B), ... DATA(E) entsprechenden Back-Annotations-Signalen gebildet ist, der sich aus dem Vergleich zwischen einem Back-Annotations-Kriterium R und seinem Klassifizierungssignal ergibt und positiv ist.

20. Verfahren zur Analyse eines Parameters nach Anspruch 19, **dadurch gekennzeichnet, dass** der Raum (i, j) zweidimensional ist und das DATA(A)-Signal den Bildpunkten einer Bildfolge zugeordnet ist.

21. Verfahren zur Analyse eines Parameters nach einem der Ansprüche 19 und 20, **dadurch gekennzeichnet, dass** das Klassifizierungskriterium (C) in Abhängigkeit der statistischen Verteilung in Echtzeit aktualisiert wird.

22. Verfahren zur Analyse eines Parameters nach Anspruch 21, **dadurch gekennzeichnet, dass** die Aktualisierung des Klassifizierungskriteriums (C) von der Entwicklung des Durchschnittswertes des zwischen zwei aufeinander folgenden Rastern (To und T1) freigegebenen Parameters $a_{ijt}$ abhängt.

23. Verfahren zur Analyse eines Parameters nach einem der Ansprüche 20 bis 22, **dadurch gekennzeichnet, dass** die Aktualisierung des Klassifizierungskriteriums (C) vorausbestimmt wird.

24. Verfahren zur Analyse eines Parameters nach Anspruch 21, **dadurch gekennzeichnet, dass** die Vorausbestimmung der Aktualisierung des Klassifizierungskriteriums (C) aus aufeinander folgenden Anwendungen eines Dilatationsoperators und eines Erosionsoperators jeweils eine Anzahl von Malen und in eine Richtung, die von der Entwicklung des Durchschnittswertes des zwischen zwei aufeinander folgenden Rastern (To und T1) freigegebe-

nen Parameters $a_{ijt}$ abhängt, ergibt.

25. Verfahren zur Analyse eines Parameters nach einem der Ansprüche 19 bis 24, **dadurch gekennzeichnet, dass** das Back-Annotations-Kriterium (R) komplex ist.

26. Verfahren zur Analyse eines Parameters nach einem der Ansprüche 19 bis 25, **dadurch gekennzeichnet, dass** das Back-Annotations-Kriterium (R) nach einer Teach-in-Phase automatisch vorgeschlagen wird.

27. Histogrammberechnungseinheit, wie sie in der automatischen Wahrnehmungsvorrichtung nach einem der Ansprüche 1 bis 16 zum Einsatz kommt.

**Claims**

1. A device for automatic perception of an event taking place in a given space and in relation with at least one digitalized parameter, **characterized in that** it comprises at least two histogram calculation units for processing said parameter(s), a control unit (513), a data bus (510), and a feedback bus (111) carrying at least one feedback signal, , the histogram calculation unit being intended for calculating a histogram representative of the parameter in relation to a validation signal and for assessing by classification a classification signal resulting form the comparison of the parameter and a selection criterion C, the classification signal being sent over the feedback bus, the validation signal being generated on the basis of feedback signals issued by the feedback bus (111) so that the histogram calculation may depend on the classification signals carried by the feedback bus.

2. An automatic perception device according to claim 1, **characterized in that** it comprises, in order to process several parameters, several histogram calculation units organized into a matrix, each calculation unit being connected to the data bus and to the feedback bus.

3. An automatic perception device according to any one of claims 1 and 2, **characterized in that** the histogram calculation units process data $a_{ijt}$ associated with pixels forming together a multidimensional space (i, j) evolving with the course of time and represented at a succession of instants (T), wherein said data reaches said calculation unit in the form of a digital signal DATA(A) in the form of a succession $a_{ijt}$ of binary numbers of n bits associated with synchronization signals enabling to define the given instant (T) of the space and the position (i, j) of the pixel in this space, to which the signal $a_{ijt}$ received at a given instant (T) is associated, said device comprising:

   - an analysis memory (100) comprising a memory with addresses, each address associated with possible values of the numbers of n bits of the signal DATA(A) and whose writing process is controlled by a WRITE signal;
   - a classifier (101) comprising a memory intended for receiving a selection criterion C of the parameter DATA (A), receiving the signal DATA(A) at the input and outputting a binary output signal whereof the value depends on the result of the comparison of the signal DATA(A) with the selection criterion C,
   - a feedback unit (102) receiving the output signal from the classifier and, from outside the histogram calculation unit, individual binary classification signals affecting parameters other than DATA(A), wherein said feedback unit outputs a positive global validation signal when all the individual feedback signals are positive,
   - a test unit (103),
   - an analysis output unit (104),
   - an address multiplexer (105),
   - an incrementation enabling unit (107)

   wherein the counter of each address in the memory corresponds to the value (d) of $a_{ijt}$ at a given instant, which is incremented by one unit when the feedback unit outputs a positive global validation signal,
   the unit (103) intended for calculating and storing statistical data processes, after receiving the data $a_{ijt}$ corresponding to the space at an instant (T), the content of the memory (100) in order to update the analysis output unit (104),
   the memory (100) being deleted before the beginning of each frame for a space at an instant (T) by an initialization signal "INIT",
   and moreover:

   - the memory of the classifier (101) is an addressable memory enabling real time updating of the selection criterion (C) and having a data input DATA IN, an address command ADDRESS and a writing command WR, receiving on its input the output from the analysis memory and a signal END on its writing command,

- the histogram processing units further comprise a data input multiplexer (108) with two inputs and one output, receiving on one of its inputs a counting signal COUNTER and on its other input, the succession of data $a_{ijt}$ and providing at output the succession of data $a_{ijt}$ to the address command of the memory of the classifier and an operator OR controlling the address multiplexer (105) and receiving on its inputs an initialization signal INIT and the end signal END.

4. An automatic perception device according to claim 3, **characterized in that** the space (i, j) is two-dimensional and **in that** the signal DATA(A) is associated with the pixels of a succession of images.

5. An automatic perception device according to any one of claims 3 and 4, **characterized in that** the histogram processing units comprise means for anticipating the value of the selection criterion (C).

6. An automatic perception device according to claim 5, **characterized in that** the means for anticipating the value of the selection criterion (C) comprise memories intended for containing the values of statistical parameters relating to two successive frames ($T_0$ and $T_1$).

7. An automatic perception device according to claim 6, **characterized in that** the statistical parameters are the average values of the data $a_{ijt}$.

8. An automatic perception device according to any one of claims 3 to 7, **characterized in that** the analysis output register (104) of the histogram calculation units constitutes and stores in its memory at least one of the following values: the minimum 'MIN', the maximum 'MAX', the maximum number of pixels for which the signal $V_{ijt}$ has a particular value 'RMAX', the particular value corresponding POSRMAX, and the total number of validated pixels 'NBPTS'.

9. An automatic perception device according to any one of claims 3 to 8, **characterized in that** the statistical comparison parameter used by the classifier is RMAX/2.

10. An automatic perception device according to any one of claims 3 to 8, **characterized in that** it comprises a controlled multiplexer, suitable to receive at input several statistical parameters and **in that** the comparison made by the classifier depends on a command issued by this multiplexer.

11. An automatic perception device according to any one of claims 3 to 10, **characterized in that** certain histogram calculation units, at least, comprise a learning multiplexer intended for receiving an external command signal and initiating an operation according to a learning mode wherein the registers of the classifier and of the feedback unit are deleted when starting to process a frame, and **in that** the analysis output register supplies values typical of the sequence of each of these registers.

12. An automatic perception device according to any one of claims 3 to 11, **characterized in that** certain histogram calculation units, at least the memory of the classifier (101) comprises a set of independent registers (D), each comprising one input, one output and one writing command, wherein the number of these registers (D) is equal to the number n of bits of the numbers of the succession $V_{ijt}$, and **in that** it comprises a decoder enabling to output a writing command signal corresponding to the related input value (address) and a multiplexer controlled by this input value, thus enabling to read the chosen register.

13. An automatic perception device according to any one of claims 3 to 12, **characterized in that** certain histogram calculation units at least, comprise multiplexers, one of them being associated with the input of each register, and combinatory modules connecting the registers to one another, said multiplexers enabling to choose between a sequential writing mode and a writing mode common to all the registers connected together by the combinatory modules.

14. An automatic perception device according to any one of claims 3 to 13, **characterized in that** in certain histogram calculation units at least, the combinatory modules comprise a morphological expansion operator including a three-input logic unit 'OR', wherein the first input unit receives the output signal of the 'Q'-order register, wherein the second input unit is connected to the output of a two-input logic unit 'AND' receiving respectively the output signal of the 'Q+1'-order register and a positive expansion signal, and wherein the third input unit is connected to the output of a two-input logic unit 'AND' receiving respectively the output signal of the 'Q-1'-order register and a negative expansion signal.

**15.** An automatic perception device according to any one of claims 3 to 13, **characterized in that** in certain histogram calculation units at least, the combinatory modules comprise a morphological erosion operator including a three-input logic unit 'AND', wherein the first input unit receives the output signal of the 'Q'-order register, wherein the second input unit is connected to the output of a logic unit 'AND', wherein one four-input reverse receives respectively the output signal of the 'Q'-order register, the output signal of the 'Q-1'-order register, the output signal of the 'Q+1'-order register and a positive erosion signal, and wherein the third input unit is connected to the output of a four-input logic unit 'AND', wherein one reverse receives respectively the output signal of the 'Q'-order register, the output signal of the 'Q-1'-order register, the output signal of the 'Q+1'-order register and a negative erosion signal.

**16.** An automatic perception device according to any one of the claims 14 and 15, **characterized in that** in certain histogram calculation units at least, each combinatory module comprises a multiplexer associating a morphological expansion operator and a morphological erosion operator.

**17.** A method for automatic perception of an event occurring in a space and with at least one parameter, consisting in digitalizing said latter, **characterized in that** said parameter is transmitted under the control of a control unit (513) over a data bus (510) to at least one histogram calculation unit, whereas the histogram calculation unit calculates a histogram representative of the parameter in relation to a validation signal and assesses by classification a classification signal resulting from the comparison of the parameter and a selection criterion C, **in that** the classification signal is sent over a feedback bus (111), and **in that**, in order to generate the validation signal, the feedback signals issued by the feedback bus are utilized, so that the histogram calculation may depend on the classification signals carried by the feedback bus.

**18.** A method according to claim 17, **characterized in that** the event is represented by several parameters and **in that** the result is derived from several histogram calculation units organized into a matrix, each calculation unit being connected to the data bus and to the feedback bus.

**19.** An analysis method according to one of claims 17 and 18 of a parameter representative of an event in an electronic device comprising a histogram calculation over data $a_{ijt}$ associated with pixels forming together a multidimensional space (i, j) evolving with the course of time and represented at a succession of instants (T), wherein said data reaches said calculation unit in the form of a digital signal DATA(A) in the form of a succession $a_{ijt}$ of binary number of n bits associated with synchronization signals enabling to define the given instant (T) of the space and the position of the pixel (i, j) in this space, to which the signal $a_{ijt}$ received at a given instant is associated, wherein:

- each data $a_{ijt}$ is associated a classification binary signal whereof the value depends on the result of the comparison between the signal DATA(A) and the selection criterion C,
- a statistical distribution of the data $a_{ijt}$ is made for a given instant (T) for which a global validation signal is positive, said global validation signal being made of a set of individual feedback signals, each one corresponding to a parameter DATA(A), DATA(B),..., DATA(E), resulting from the comparison between a feedback criterion R and the classification signal and being positive.

**20.** A method for analyzing a parameter according to claim 19, **characterized in that** the space (i, j) is two-dimensional and **in that** the signal DATA(A) is associated with the pixels of a succession of images.

**21.** A method for analyzing a parameter according to one of claims 19 and 20, **characterized in that** the classification criterion (C) is updated, in real time, in relation to the statistical distribution.

**22.** A method for analyzing a parameter according to claim 21, **characterized in that** updating the classification criterion (C) depends on the evolution of the average of the parameter $a_{ijt}$ validated between two successive frames ($T_0$ and $T_1$).

**23.** A method for analyzing a parameter according to any one of claims 20 to 22, **characterized in that** the update of the classification criterion (C) is anticipated.

**24.** A method for analyzing a parameter according to claim 23, **characterized in that** anticipating the update of the classification criterion (C) results from successive applications of an expansion operator and of an erosion operator, each of them, a number of times and in a direction depending on the evolution of the average value of the parameter $a_{ijt}$ validated between two successive frames ($T_0$ and $T_1$).

25. A method for analyzing a parameter according to any one of claims 19 to 24, **characterized in that** the feedback criterion (R) is complex.

26. A method for analyzing a parameter according to any one of claims 19 to 25, **characterized in that** the feedback criterion (R) is suggested automatically further to a learning stage.

27. A histogram calculation unit as implemented in the automatic perception device according to any one of claims 1 to 16.

ART ANTERIEUR

FIG. 1

EP 1 259 939 B1

36

**FIG. 2**

**FIG. 3**

FIG. 4

**FIG. 5**

**FIG. 6**

DEPART ESCLAVE

INIT=0; END=0; WRITE=0;

CLOCK

ST=1   OUI

INIT=1
COUNTER=0

COUNTER=Max_DATA   OUI

CLOCK

COUNTER=COUNTER+1

CLOCK

INIT=0;
Row_Counter=0
Col_Counter=0;

SL=1   OUI

OUI   Row_Counter=Row_Size

OUI   Col_Counter=Col_Size

| Val-Zone | |
| Sequence Courbe | Row_Curve Col_Curve |

WRITE=0

CLOCK

WRITE=0

CLOCK

SL=1   OUI

WRITE=1

CLOCK

END=1

Col_Counter=0
Row_Counter=Row_Counter+1

Col_Counter=Col_Counter+1

COUNTER=0

OUI   COUNTER=Max_DATA

CLOCK

END=0

CLOCK

COUNTER=COUNTER+1

| Registres |
| Max_DATA |
| Row_Size |
| Col_Size |
| Row_Curve_Size |
| Col_Curve_Size |
| Init_Row_Curve |
| Init_Col_Curve |

**FIG. 7**

40

**Fig. 8**

**Fig. 9**

**Fig. 10**

**Fig. 11**

EP 1 259 939 B1

FIG. 12

FIG. 13

44

FIG. 13c

FIG. 14

FIG. 15

FIG. 15a

FIG. 16

FIG. 17

FIG. 18

FIG. 19

FIG. 20

Anticipation

310

$POSMOY_0 - POSMOY_1 \geq 0$

OUI

$A = POSMOY_1 - POSMOY_0$
Sign=1

$A = POSMOY_0 - POSMOY_1$
Sign=0

311

ETD=1
SM=1
T=0

ETD=1
SP=1
T=0

Attente
A*Clock

Attente
A*Clock

SM=0
SP=1
T=1

SP=0
SM=1
T=1

Attente
A*Clock

Attente
A*Clock

ETD=0; SM=0; SP=0; T=0;

FIN

**FIG. 21**

**FIG 22**

**FIG. 39**

**FIG. 23**

A product term

**FIG. 24**

**FIG. 25**

EP 1 259 939 B1

**FIG. 26**

**FIG. 27**

**Fig. 28**

**Fig. 29**

FIG. 30

S(t)

Clock

ST

SL

5

6

DATA (A)

DATA (B)

DATA (C)

DATA (D)

DATA (E)

1 A

1 B

1 C

1 D

1 E

111

FIG. 31

Data (A)

Data (B)

Data (C)

Data (E)

510

500

MUX

Reg.

501

SELECT

502

503

0
1 MUX

LEARN

Out

1

1a

12

111

**Fig. 31a**

**Fig 13a**

**Fig 13b**

**FIG. 32**

**FIG. 33**

FIG. 34

530

**FIG. 35**

**FIG. 36**

**FIG. 37**

FIG. 38

FIG. 40